(19) Europäisches Patentamt
European Patent Office
Office européen des brevets

(11) **EP 4 742 673 A1**

(12) **EUROPEAN PATENT APPLICATION**
published in accordance with Art. 153(4) EPC

(43) Date of publication:
**13.05.2026 Bulletin 2026/20**

(21) Application number: **23943988.8**

(22) Date of filing: **03.07.2023**

(51) International Patent Classification (IPC):
**H04N 19/52** (2014.01)     **H04N 19/61** (2014.01)
**H04N 19/147** (2014.01)     **H04N 19/132** (2014.01)

(52) Cooperative Patent Classification (CPC):
**H04N 19/132; H04N 19/147; H04N 19/52;
H04N 19/61**

(86) International application number:
**PCT/CN2023/105584**

(87) International publication number:
**WO 2025/007254 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HUANG, Hang
Dongguan, Guangdong 523860 (CN)**

(74) Representative: **Mewburn Ellis LLP
Aurora Building
Counterslip
Bristol BS1 6BX (GB)**

(54) **VIDEO ENCODING METHOD AND APPARATUS, VIDEO DECODING METHOD AND APPARATUS, DEVICE, SYSTEM, AND STORAGE MEDIUM**

(57)     The present application provides a video encoding method and apparatus, a video decoding method and apparatus, a device, a system, and a storage medium. When a current chroma block is predicted by using a cross-component prediction mode, cross-component prediction model parameters and a filtering identifier of the current chroma block are determined, the filtering identifier of the current chroma block being determined on the basis of a filtering identifier of an encoded/decoded image block around the current chroma block; on the basis of the cross-component prediction model parameters, cross-component prediction is performed on the current chroma block to obtain a first prediction value of the current chroma block; and on the basis of the filtering identifier and the first prediction value of the current chroma block, a second prediction value of the current chroma block is determined. That is, according to the present application, by filtering a chroma prediction value obtained by means of the cross-component prediction mode, the accuracy of cross-component prediction is improved, and the encoding/decoding performance is improved. In addition, the filtering identifier of the current chroma block inherits the filtering identifier of the encoded/decoded block, and no additional bit consumption needs to be introduced to indicate the filtering identifier, thereby saving codewords and improving the encoding efficiency.

In response to determining that a prediction mode for a current chroma block is a cross-component prediction mode, determining a cross-component prediction model parameter and a filter flag of the current chroma block — S101

Performing a cross-component prediction on the current chroma block based on the cross-component prediction model parameter, to obtain a first prediction value of the current chroma block — S102

Determining a second prediction value of the current chroma block based on the filter flag of the current chroma block and the first prediction value — S103

FIG. 8

## Description

### TECHNICAL FILED

The present disclosure relates to the technical field of video encoding and decoding, and in particular, to a video encoding method and apparatus, a video decoding method and apparatus, a device, a system, and a storage medium.

### BACKGROUND

Digital video technology is capable of being incorporated into a variety of video apparatuses, such as a digital television, a smartphone, a computer, an e-reader, or a video player. With the development of the video technology, data volume included in video data is relatively large. In order to facilitate transmission of the video data, the video device implements the video compression technology to make the video data can be transmitted or stored more effectively.

Since there is a temporal or spatial redundancy in the video, the redundancy in the video may be eliminated or reduced through prediction, and the compression efficiency is thus improved. Cross-component prediction can predict a chroma component based on a reconstructed value of a luma component. However, the prediction effect for chroma prediction values obtained from certain cross-component prediction modes is not ideal.

### SUMMARY

Embodiments of the present disclosure provide a video encoding method and apparatus, a video decoding method and apparatus, a device, a system, and a storage medium. Though filtering a chroma prediction value obtained from cross-component prediction, the cross-component prediction effect for a chroma is improved, and the filter flag of the current chroma block inherits the filter flag of the reconstructed block without introducing additional bit consumption to indicate the filter flag, thereby improving encoding efficiency.

In a first aspect, the present disclosure provides a video decoding method, applied to a decoder, and includes:

in response to determining that a prediction mode for a current chroma block is a cross-component prediction mode, determining a cross-component prediction model parameter and a filter flag of the current chroma block, where the cross-component prediction model parameter is a model parameter used for predicting the current chroma block using the cross-component prediction mode, the filter flag of the current chroma block is determined based on a filter flag of a decoded picture block around the current chroma block, and the filter flag is used to indicate whether to perform filtering on a prediction value obtained based on the cross-component prediction mode;

performing cross-component prediction on the current chroma block based on the cross-component prediction model parameter, to obtain a first prediction value of the current chroma block; and

determining a second prediction value of the current chroma block based on the first prediction value and the filter flag of the current chroma block.

In a second aspect, the embodiments of the present disclosure provide a video encoding method, applied to an encoder, and includes:

in response to determining that a prediction mode for a current chroma block is a cross-component prediction mode, determining a cross-component prediction model parameter and a filter flag of the current chroma block, where the cross-component prediction model parameter is a model parameter used for predicting the current chroma block using the cross-component prediction mode, the filter flag of the current chroma block is determined based on a filter flag of an encoded picture block around the current chroma block, and a filter flag is used to indicate whether to perform filtering on a prediction value obtained based on the cross-component prediction mode;

performing cross-component prediction on the current chroma block based on the cross-component prediction model parameter, to obtain a first prediction value of the current chroma block; and

determining a second prediction value of the current chroma block based on the first prediction value and the filter flag of the current chroma block.

In a third aspect, the present disclosure provides a video decoding apparatus, which is configured to perform the method in the above-mentioned first aspect or various implementations thereof. Specifically, the apparatus includes a functional unit configured to perform the method in the above-mentioned first aspect or various implementations thereof.

In a fourth aspect, the present disclosure provides a video encoding apparatus, configured to perform the method in the above-mentioned second aspect or various implementations thereof. Specifically, the apparatus includes a functional unit configured to perform the method in the above-mentioned second aspect or various implementations thereof.

In a fifth aspect, the present disclosure provides a video decoder, which includes a processor and a memory. The memory is configured to store a computer program, and the processor is configured to invoke and execute the computer program stored in the memory to implement the method in the above-mentioned first aspect or various implementations thereof.

In a sixth aspect, the present disclosure provides a video encoder, which includes a processor and a memory. The memory is configured to store a computer program, and the processor is configured to invoke and execute the computer program stored in the memory to implement the method in the above-mentioned second aspect or various implementations thereof.

In a seventh aspect, the present disclosure provides a video encoding and decoding system, which includes a video encoder and a video decoder. The video decoder is configured to perform the method in the above-mentioned first aspect or various implementations thereof, and the video encoder is configured to perform the method in the above-mentioned second aspect or various implementations thereof.

In an eighth aspect, the present disclosure provides a chip, which is configured to perform the method of any one of the above-mentioned first aspect and second aspect or any of various implementations thereof. Specifically, the chip includes: a processor configured to invoke and execute a computer program from a memory, to enable a device equipped with the chip to perform the method according to any one of the above-mentioned first aspect and second aspects or any of various implementations thereof.

In a ninth aspect, the present disclosure provides a computer-readable storage medium for storing a computer program, and the computer program enables a computer to perform the method of any one of the above-mentioned first aspect and second aspects or any of various implementations thereof.

In a tenth aspect, the present disclosure provides a computer program product, including computer program instructions, and the computer program instructions enable a computer to execute the method of any one of the above-mentioned first aspect and second aspects or any of various implementations thereof.

In an eleventh aspect, the present disclosure provides a computer program which, when executed on a computer, enables the computer to execute the method in any one of the above-mentioned first aspect and second aspects or any of various implementations thereof.

Based on the above technical solutions, upon performing prediction on the current chroma block using the cross-component prediction mode, the codec side (i.e., the encoder side and the decoder side) determines the cross-component prediction model parameter and the filter flag of the current chroma block; where the filter flag of the current chroma block is determined based on the filter flag of the picture block that is encoded or decoded around the current chroma block, and is used to indicate whether to perform filtering on the prediction value obtained based on the cross-component prediction mode; then, based on the cross-component prediction model parameter, the cross-component prediction is performed on the current chroma block to obtain the first prediction value of the current chroma block; and then, based on the filter flag and the first prediction value of the current chroma block, the second prediction value of the current chroma block is determined. That is, prediction is performed on the first prediction value obtained from any cross-component prediction mode in the embodiments of the present disclosure, thereby improving the prediction effect of cross-component prediction and enhancing the encoding and decoding performance. In addition, in the embodiments of the present disclosure, the filter flag of the current chroma block is obtained by inheriting the filter flag of the encoded or decoded block, without introducing additional bit consumption to indicate the filter flag, thereby saving codewords and improving encoding efficiency.

## BRIEF DESCRIPTION OF THE DRAWINGS

FIG. 1 is a schematic block diagram of a video encoding and decoding system involved in the embodiments of the present disclosure.

FIG. 2 is a schematic block diagram of a video encoder involved in the embodiments of the present disclosure.

FIG. 3 is a schematic block diagram of a video decoder involved in the embodiments of the present disclosure.

FIG. 4A is a schematic diagram of intra prediction.

FIG. 4B is a schematic diagram of intra prediction.

FIG. 5A to FIG. 5I are schematic diagrams of intra prediction.

FIG. 6A and FIG. 6B are schematic diagrams of cross-component linear model (CCLM) prediction.

FIG. 6C is a schematic diagram of CCLM_SLOPE mode.

FGIG. 6D is an example diagram of the multi-model linear model (MMLM) mode.

FIG. 6E is a schematic diagram of a convolution filter.

FIG. 6F is a schematic diagram of a chroma reference template area of the convolutional cross-component model (CCCM) mode.

FIG. 7A is a schematic diagram of neighboring candidate positions in spatial domain.

FIG. 7B is a schematic diagram of non-neighboring candidate positions in spatial domain.

FIG. 7C is a schematic diagram of a $3\times3$ low-pass filter.

FIG. 8 is a flowchart of a video decoding method provided in an embodiment of the present disclosure.

FIG. 9 is a flowchart of a prediction method provided in an embodiment of the present disclosure.

FIG. 10 is a schematic block diagram of a video decoding apparatus provided in an embodiment of the present disclosure.

FIG. 11 is a schematic block diagram of a video encoding apparatus provided in an embodiment of the present disclosure.

FIG. 12 is a schematic block diagram of an electronic device provided in the embodiments of the present disclosure.

FIG. 13 is a schematic block diagram of a video encoding and decoding system provided in the embodiment of the present disclosure.

## DETAILED DESCRIPTION

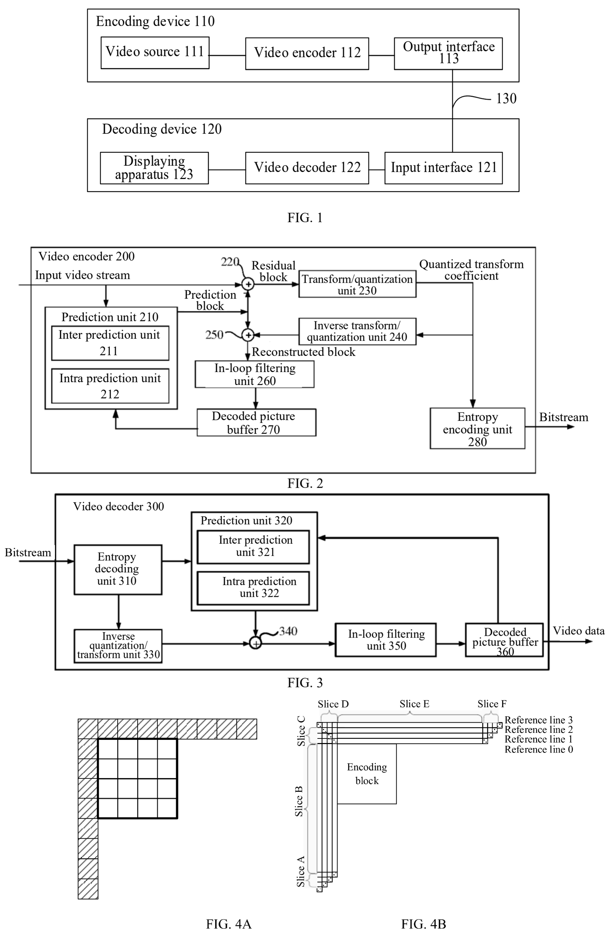

The present disclosure may be applied to the field of picture encoding and decoding, the field of video encoding and decoding, the field of hardware video encoding and decoding, the field of dedicated-purpose circuit video encoding and decoding, the field of real-time video encoding and decoding, or the like. For example, the solutions of the present disclosure may be incorporated into the audio video coding standard (which is abbreviated as AVS), such as H.264/audio video coding (which is abbreviated as AVC) standard, H.265/high efficiency video coding (which is abbreviated as HEVC) standard, and H.266/versatile video coding (which is abbreviated as VVC) standard. Alternatively, the solutions of the present disclosure may be incorporated into other dedicated or industrial standards for operations, where the standards include ITU-TH.261, ISO/IECMPEG-1Visual, ITU-TH.262 or ISO/IECMPEG-2Visual, ITU-TH.263, ISO/IECMPEG-4Visual, and ITU-TH.264 (also referred to as ISO/IECMPEG-4AVC), which contains extensions on scalable video coding (SVC) extension and multi-view video coding (MVC). It should be understood that the technologies applied to the present disclosure are not limited to any specific encoding and decoding standard or technology.
For ease of understanding, a video encoding and decoding system involved in the embodiments of the present disclosure is first introduced with reference to FIG. 1.
FIG. 1 is a schematic block diagram of a video encoding and decoding system involved in the embodiments of the present disclosure. It should be noted that FIG. 1 is merely an example, and the video encoding and decoding system of the embodiments of the present disclosure includes but is not limited to what is illustrated in FIG. 1. As illustrated in FIG. 1, the video encoding and decoding system 100 includes an encoding device 110 and a decoding device 120. Herein, the encoding device is configured to encode (also may be understood as compress) video data to generate a bitstream, and transmit the bitstream to the decoding device. The decoding device decodes the bitstream generated by the encoding device to obtain decoded video data.
In the embodiments of the present disclosure, the encoding device 110 may be understood as a device with functions for video encoding, and the decoding device 120 may be understood as a device with functions for video decoding. That is, in the embodiments of the present disclosure, the encoding device 110 and the decoding device 120 include a wide range of apparatuses, such as smartphones, desktop computers, a mobile computing apparatuses, notebook computers (e.g., laptops), tablet computers, set-top boxes, televisions, cameras, displaying apparatuses, digital media players, video game consoles, in-vehicle computers.

In some embodiments, the encoding device 110 may transmit encoded video data (e.g., a bitstream) to the decoding device 120 via a channel 130. The channel 130 may include one or more media and/or apparatuses that are able to transmit the encoded video data from the encoding device 110 to the decoding device 120.

In an instance, the channel 130 includes one or more communication media that enable the encoding device 110 to transmit the encoded video data directly to the decoding device 120 in real-time. In this instance, the encoding device 110 may modulate the encoded video data according to a communication standard, and transmit the modulated video data to the decoding device 120. The communication media includes a wireless communication medium, e.g., a radio frequency spectrum. Optionally, the communication medium may include a wired communication medium, e.g., one or more physical transmission lines.

In another instance, the channel 130 includes a storage medium, and the storage medium may store the video data encoded by the encoding device 110. The storage medium includes a variety of local access data storage media, such as an optical disk, a digital video disk (DVD), and a flash memory. In this instance, the decoding device 120 may obtain the encoded video data from the storage medium.

In yet another instance, the channel 130 may include a storage server, the storage server may store the video data encoded by the encoding device 110. In this instance, the decoding device 120 may download the encoded video data stored in the storage server from the storage server. Optionally, the storage server (such as a web server (e.g., configured for a website), or a file transfer protocol (FTP) server, etc.) may store the encoded video data therein, and transmit the encoded video data to the decoding device 120.

In some embodiments, the encoding device 110 includes a video encoder 112 and an output interface 113. Herein, the output interface 113 may include a modulator/demodulator (a modem) and/or a transmitter.

In some embodiments, the encoding device 110 may further includes a video source 111 in addition to the video encoder 112 and the input interface 113.

The video source 111 may include at least one of a video harvesting apparatus (e.g., a video camera), a video archive, a video input interface, or a computer graphics system; where the video input interface is configured to receive video data from a video content provider, and the computer graphics system is configured to generate the video data.

The video encoder 112 encodes the video data from the video source 111 to generate a bitstream. The video data may include one or more pictures or sequences of pictures. The bitstream contains encoded information of picture(s) or encoded information of the sequence of pictures in the form of a bit stream. The encoded information may include encoded picture data and associated data. The associated data may include a sequence parameter set (which is abbreviated as SPS), a picture parameter set (which is abbreviated as PPS) and other syntax structures. An SPS may contain parameters that are applied to one or more sequences. A PPS may contain parameters that are applied to one or more pictures. A syntax structure is a set of zero or a plurality of syntax elements arranged in a specified order in the bitstream.

The video encoder 112 transmits the encoded video data directly to the decoding device 120 via the output interface 113. The encoded video data may also be stored in a storage medium or a storage server for subsequent reading by the decoding device 120.

In some embodiments, the decoding device 120 includes an input interface 121 and a video decoder 122.

In some embodiments, the decoding device 120 may further include a displaying apparatus 123 in addition to the input interface 121 and the video decoder 122.

Here, the input interface 121 includes a receiver and/or a modem. The input interface 121 may receive the encoded video data via the channel 130.

The video decoder 122 is configured to decode the encoded video data to obtain decoded video data, and transmit the decoded video data to the displaying apparatus 123.

The displaying apparatus 123 displays the decoded video data. The displaying apparatus 123 may be integrated with the decoding device 120 or is arranged to be outside of the decoding device 120. The displaying apparatus 123 may include various displaying apparatuses, such as a liquid crystal display (LCD), a plasma display, an organic light emitting diode (OLED) display, or other types of displaying apparatuses.

In addition, FIG. 1 is merely an instance, and the technical solutions of the embodiments of the present disclosure are not limited to FIG. 1. For example, the technologies of the present disclosure may also be applied to unilateral video encoding or unilateral video decoding.

The architecture of video encoding involved in the embodiments of the present disclosure is introduced below.

FIG. 2 is a schematic block diagram of a video encoder involved in the embodiments of the present disclosure. It should be understood that the video encoder 200 may be configured to perform lossy compression on a picture, or may be configured to perform lossless compression on a picture. The lossless compression may be visually lossless compression or mathematically lossless compression.

The video encoder 200 may be applied to picture data in a luma and chroma (i.e., YCbCr (YUV)) format. For example, a YUV ratio may be 4:2:0, 4:2:2 or 4:4:4, where Y represents luma, Cb (U) represents blue chroma, Cr (V) represents red chroma, and "U and V" represent chroma for describing color and saturation. For example, in the color format, 4:2:0 means that there are 4 luma components and 2 chroma components (YYYYCbCr) per 4 samples; 4:2:2 means that there are 4 luma components and 4 chroma components (YYYYCbCrCbCr) per 4 samples; and 4:4:4 means full sample display (YYYYCbCrCbCrCbCrCbCr).

For example, the video encoder 200 reads video data, and for each picture (frame) in the video data, partitions one picture into several coding tree units (CTUs). In some examples, a CTB may be referred to as a "tree block", "largest coding unit (which is abbreviated as LCU)" or "coding tree block (which is abbreviated as CTB)". Each CTU may be associated with sample blocks of equal size in the picture. Each picture sample may correspond to a luma (luminance) sample and two chroma (chrominance) samples. Thus, each CTU may be associated with one luma sample block and two chroma sample blocks. A size of a CTU is, for example, 128×128, 64×64, or 32×32. Further, a CTU may be partitioned into several coding units (CUs) for encoding. A CU may be a rectangular block or a square block. Further, the CU may be partitioned into prediction units (PUs) and transform units (TUs), which makes encoding, prediction and transform separation more flexible in processing. In an example, a CTU is partitioned into CUs in a quadtree manner, and a CU is partitioned into TUs and PUs in the quadtree manner.

The video encoder and the video decoder may support various PU sizes. Assuming that the size of a specific CU is 2N×2N, the video encoder and the video decoder may support a PU size of 2N×2N or N×N for intra prediction, and support symmetric PUs of 2N×2N, 2N×N, N×2N, N×N or similar sizes for inter prediction. The video encoder and video decoder may also support asymmetric PUs of 2N×nU, 2N×nD, nL×2N, and nR×2N for inter prediction.

In some embodiments, as illustrated in FIG. 2, the video encoder 200 may include: a prediction unit 210, a residual unit 220, a transform/quantization unit 230, an inverse transform/quantization unit 240, a reconstruction unit 250, an in-loop filtering unit 260, a decoded picture buffer 270 and an entropy encoding unit 280. It should be noted that the video decoder 200 may include more, fewer or different functional components.

Optionally, in the present disclosure, a current block may be referred to as a current coding unit (CU) or a current prediction unit (PU), or the like. A prediction block may also be referred to as a prediction picture block or a picture prediction block, and the reconstructed picture block may also be referred to as a reconstructed block or a picture block for picture reconstruction.

In some embodiments, the prediction unit 210 includes an inter prediction unit 211 and an intra prediction unit 212. Since there is a strong correlation between neighboring samples in a picture of a video, in the video encoding and decoding technology, the intra prediction mode is used to eliminate spatial redundancy between the neighboring samples. Since there is strong similarity between neighboring pictures in the video, in the video encoding and decoding technology, the inter prediction mode is used to eliminate temporal redundancy between the neighboring samples, thereby improving the encoding efficiency.

The inter prediction unit 211 may be used for inter prediction, and the inter prediction may include motion estimation and motion compensation, which may refer to picture information of different frames (pictures). In the inter prediction, motion information is used to find a reference block from a reference picture, and a prediction block is generated according to the reference block to eliminate temporal redundancy. Frames used for the inter prediction may include a P frame and/or a B frame, the P frame refers to a forward-predicted frame, and the B frame refer to a bidirectional-predicted frame. In the inter prediction, the motion information is used to find the reference block from the reference picture, and the prediction block is generated according to the reference block. The motion information includes a reference picture list where the reference picture is located, a reference picture index, and a motion vector. The motion vector may belong to an integer sample or a fractional sample. If the motion vector belongs to the fractional sample, it is necessary to use interpolation filtering in the reference picture to obtain a block of the required fractional sample. Here, the block of the integer sample or fractional sample in the reference sample, which is found according to the motion vector, is referred to as the reference block. The reference block is used as a prediction block directly in some technologies, while a prediction block is generated on the basis of processing the reference block in some technologies. The prediction block being generated on the basis of processing the reference block may also be understood as the reference block serving as a prediction block and then processing the prediction block to generate a new prediction block.

The intra prediction unit 212 only refers to information of a picture in a same frame to predict sample information of a current coding picture block to eliminate spatial redundancy. A frame used for intra prediction may be an I frame.

There are several prediction modes for intra prediction. Taking the H series of international digital video encoding standards as an example, H.264/AVC standard has 8 angle prediction modes and 1 non-angle prediction mode, and H.265/HEVC standard is expanded to have 33 angle prediction modes and 2 non-angle prediction modes. The intra prediction modes used by HEVC include a Planar mode, a DC mode and 33 angle modes, for a total of 35 prediction modes. The intra modes used for VVC includes a Planar mode, a DC mode, and 65 angle modes, for a total of 67 prediction modes.

It should be noted that with the addition of angle modes, the intra prediction will be more accurate and more in line with the requirements of the evolution of high-definition and ultra-high-definition digital video.

The residual unit 220 may generate a residual block of a CU based on a sample block of the CU and a prediction block of a PU of the CU. For example, the residual unit 220 may generate a residual block of the CU, so that each sample of the residual block has a value equal to a difference between: a sample of the sample block of the CU and a corresponding sample of the prediction block of the PU of the CU.

The transform/quantization unit 230 may quantize a transform coefficient. The transform/quantization unit 230 may quantize a transform coefficient associated with a TU of a CU based on a quantization parameter (QP) value associated with the CU. The video encoder 200 may adjust a quantization degree of the transform coefficient associated with the CU by adjusting the QP value associated with the CU.

The inverse transform/quantization unit 240 may apply both inverse quantization and inverse transform to a quantized transform coefficient to reconstruct a residual block from the quantized transform coefficient.

The reconstruction unit 250 may add a sample of the reconstructed residual block to a corresponding sample of one or more prediction blocks generated by the prediction unit 210 to generate a reconstructed picture block associated with the TU. By reconstructing the sample blocks of each TU of the CU in this manner, the video encoder 200 may reconstruct the sample block of the CU.

The in-loop filtering unit 260 is configured to process inverse transformed and inverse quantized samples to perform compensation on distortion information, so as to provide a good reference for subsequent encoded samples. For example, a deblocking filtering operation may be performed to reduce the blocking effect of sample blocks associated with the CU.

In some embodiments, the in-loop filtering unit 260 includes a deblocking filtering unit and a sample adaptive offset/adaptive loop filtering (SAO/ALF) unit. The deblocking filtering unit is configured to remove blocking effect, and the SAO/ALF unit is configured to remove ringing effect.

The decoded picture buffer 270 may store the reconstructed sample blocks. The inter prediction unit 211 may use a reference picture containing the reconstructed sample blocks to perform the inter prediction on a PU of other pictures. In addition, the intra prediction unit 212 may use the reconstructed sample blocks stored in the decoded picture buffer 270 to perform intra prediction on other PUs of the same picture as the CU.

The entropy encoding unit 280 may receive the quantized transform coefficient from the transform/quantization unit 230. The entropy encoding unit 280 may perform one or more entropy coding operations on the quantized transform coefficient to generate entropy-coded data.

FIG. 3 is a schematic block diagram of a video decoder involved in the embodiments of the present disclosure.

As illustrated in FIG. 3, the video decoder 300 includes an entropy decoding unit 310, a prediction unit 320, an inverse quantization/transform unit 330, a reconstruction unit 340, an in-loop filtering unit 350, and a decoded picture buffer 360. It should be noted that the video decoder 300 may include more, fewer or different functional components.

The video decoder 300 may receive a bitstream. The entropy decoding unit 310 may parse the bitstream to extract syntax elements from the bitstream. As a portion of parsing the bitstream, the entropy decoding unit 310 may parse the entropy-coded syntax elements in the bitstream. The prediction unit 320, the inverse quantization/transform unit 330, the reconstruction unit 340, and the in-loop filtering unit 350 may decode video data according to the syntax elements extracted from the bitstream, that is, generating the decoded video data.

In some embodiments, the prediction unit 320 includes an intra prediction unit 322 and an inter prediction unit 321.

The intra prediction unit 322 may perform intra prediction to generate a prediction block of a PU. The intra prediction unit 322 may use an intra prediction mode to generate a prediction block of the PU based on sample blocks of neighboring PUs for the PU in spatial domain. The intra prediction unit 322 may further determine the intra prediction mode for the PU according to one or more syntax elements parsed from the bitstream.

The inter prediction unit 321 may construct a first reference picture list (list 0) and a second reference picture list (list 1) according to syntax elements parsed from the bitstream. Furthermore, if the PU is encoded using inter prediction, the entropy decoding unit 310 may parse motion information of the PU. The inter prediction unit 321 may determine one or more reference blocks of the PU according to the motion information of the PU. The inter prediction unit 321 may generate a prediction block of the PU based on one or more reference blocks of the PU.

The inverse quantization/transform unit 330 may inverse quantize (i.e., dequantize) a transform coefficient associated with a TU. The inverse quantization/transform unit 330 may use a QP value associated with a CU of the TU to determine a quantization degree.

After inverse quantizing the transform coefficient, the inverse quantization/transform unit 330 may apply one or more inverse transforms to the inverse quantized transform coefficient to generate a residual block associated with the TU.

The reconstruction unit 340 reconstructs a sample block of the CU by using the residual block associated with the TU of the CU and the prediction block of the PU of the CU. For example, the reconstruction unit 340 may add samples of the residual block to corresponding samples of the prediction block to reconstruct the pixel block of the CU to obtain a reconstructed picture block.

The in-loop filtering unit 350 may perform a deblocking filtering operation to reduce the blocking effect of the sample block associated with the CU.

The video decoder 300 may store the reconstructed picture of the CU in the decoded picture buffer 360. The video decoder 300 may use the reconstructed picture stored in the decoded picture buffer 360 as a reference picture for subsequent prediction, or transmit the reconstructed picture to a displaying apparatus for presentation.

The basic procedure of video encoding and decoding is as follows. At the encoder side, a picture is partitioned into blocks, and for a current block, the prediction unit 210 generates a prediction block of the current block using intra prediction or inter prediction. The residual unit 220 may calculate a residual block (i.e., a difference between the prediction block and an original block of the current block, where the residual block may is also referred to as residual information) based on the prediction block and an original block of the current block. The transform/quantization unit 230 performs processes such as transform and quantization on the residual block, thus the information that is not sensitive to the human eye in the residual block may be removed to eliminate visual redundancy. Optionally, the residual block that has not been transformed and quantized by the transform/quantization unit 230 may be referred to as a time domain residual block, and the temporal residual block after being transformed and quantized by the transform/quantization unit 230 may be referred to as a frequency residual block or a frequency domain residual block. After receiving the quantized transform coefficient output by the transform/quantization unit 230, the entropy encoding unit 280 may perform entropy coding on the quantized transform coefficient to output a bitstream. For example, the entropy encoding unit 280 may eliminate character redundancy according to a target context model and probability information of a binary bitstream.

At the decoder side, the entropy decoding unit 310 may parse the bitstream to obtain prediction information, a quantization coefficient matrix, etc., of the current block, and the prediction unit 320 applies intra prediction or inter prediction on the current block based on the prediction information to generate a prediction block of the current block. The inverse quantization/transform unit 330 performs inverse quantization and inverse transform on the quantization coefficient matrix obtained from the bitstream to obtain a residual block. The reconstruction unit 340 adds the prediction block and the residual block to obtain a reconstructed block. Reconstructed blocks constitute a reconstructed picture. The in-loop filtering unit 350 performs in-loop filtering on the reconstructed picture based on a picture or a block to obtain a decoded picture. At the encoder side, it also needs to perform operations similar to those at the decoder side to obtain the decoded picture. The decoded picture may also be referred to as a reconstructed picture, the reconstructed picture may be used as a reference frame for the inter prediction for a subsequent frame.

It should be noted that block partition information, as well as mode information or parameter information, etc., for prediction, transform, quantization, entropy coding, in-loop filtering, etc., which are determined by the encoder side, are carried in the bitstream if necessary. The decoder side determines the same block partitioned information, mode information or parameter information, etc., for prediction, transform, quantization, entropy coding, in-loop filtering, etc., as that at the encoder side by parsing the bitstream and performing analysis on the existing information, thereby ensuring that the decoded picture obtained at the encoder side is the same as the decoded picture obtained at the decoder side.

The above description is the basic procedure for the video encoder and decoder under the block-based hybrid coding framework. With the evolution of technologies, some modules or steps of the framework or procedure may be optimized. The present disclosure is applicable to the basic procedure of the video encoder and decoder under the block-based hybrid encoding framework, but is not limited to the framework and procedure.

In the embodiments of the present disclosure, the current block may be a current coding unit (CU) or a current prediction unit (PU), etc. Due to a need for parallel processing, the picture may be partitioned into slices, and the slices of the same picture may be processed in parallel, that is, there is no data dependency between these slices. "Frame" is a commonly used term, and one frame may be generally understood as one picture. In the present disclosure, a frame may also be replaced by a picture or a slice, etc.

For the intra prediction, a current coding block is usually predicted by means of various angle modes and non-angle modes to obtain a prediction block; and an optimal prediction mode for the current encoding unit is screened out according to rate-distortion information calculated and obtained based on the prediction block and an original block, and then the prediction mode is transmitted to the decoder side through the bitstream. The decoder side parses the prediction mode, and perform prediction to obtain a predicted picture of the current decoding block, and the predicted picture is superimposed onto residual samples transmitted from the bitstream, thus to obtain the reconstructed picture. For the intra prediction mode, reconstructed samples that have been encoded or decoded around the current block may be used as reference samples for performing prediction on the current block. FIG. 4A is a schematic diagram of intra prediction. As illustrated in FIG. 4A, a size of the current block is $4 \times 4$, and samples in a left column and a top row of the current block are reference samples of the current block. For the intra prediction, the prediction is performed on the current block by using these reference samples. For these reference samples, all of them may be available, that is, all of them have been encoded or decoded; or a portion of them may be unavailable, for example, the current block is at the leftmost edge of the whole picture, then reference samples at the left of the current block are unavailable; or in a case of encoding or decoding the current block, a bottom-left portion of the current block has not been encoded or decoded yet, so that reference samples at the bottom-left is also unavailable. For the case that the reference samples are unavailable, available reference samples or certain values or methods may be used for padding or not.

FIG. 4B is a schematic diagram of intra prediction. As illustrated in FIG. 4B, for a multiple reference line (MRL) intra prediction mode, more reference samples may be used to improve encoding efficiency; for example, four reference rows/columns are used as reference samples of the current block.

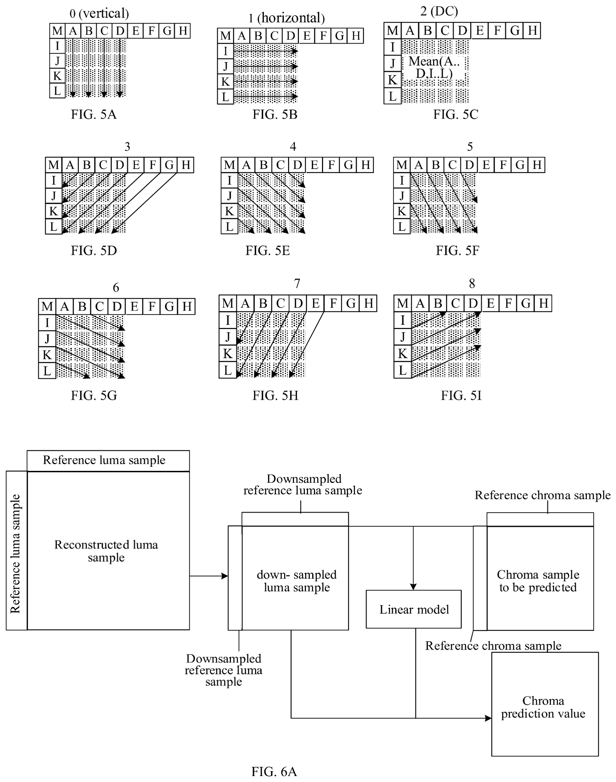

Furthermore, there are several prediction modes for intra prediction. FIGs. 5A to 5I are schematic diagrams of intra prediction. As illustrated in FIGs. 5A to 5I, intra prediction for 4×4 blocks in H.264 may mainly include 9 modes. For mode 0 illustrated in FIG. 5A, samples on the top of the current block are copied in vertical direction to the current block as prediction values; for the mode 1 illustrated in FIG. 5B, reference samples on the left of the current block are copied in horizontal direction to the current block as prediction values; for the mode 2 (direct current, DC) illustrated in FIG. 5C, an average value of eight points A to D and I to L is used as a prediction value of all points; and for the modes 3 to 8 illustrated in FIGs. 5D to 5I, reference samples are copied to corresponding positions of the current block according to a certain angle, respectively. Since certain positions of the current block correspond exactly to no reference sample, a weighted average value of reference samples, or interpolated fractional samples of the reference samples may need to be used.

In the field of video encoding, "component" is a professional term, which generally refers to the three components Y, Cb and Cr (or "Y", "U" and "V"), where Y represents luma information, Cb and Cr represent chroma information.

In H.266, before performing prediction encoding on chroma components of a CU, luma components have been finished for being encoded, and reconstructed values of the luma components have been obtained. In order to remove the redundancy between different color channels, a cross-component prediction mode is proposed, which concept is to use the reconstructed luma block to predict a current chroma block to be predicted. During the prediction, it is necessary to construct a linear or nonlinear relationship between luma and chroma based on reconstructed luma sample values and chroma sample values.

In some embodiments, a cross-component intra prediction mode includes, but is not limited to the following: cross-component linear model prediction (which is abbreviated as CCLM), convolutional cross component model (which is abbreviated as CCCM), gradient linear model (which is abbreviated as GLM), and cross-component prediction merge mode (which is abbreviated as CCP merge mode).

Exemplarily, Table 1 shows syntaxes related to a chroma prediction mode.

Table 1

| intra chroma pred mode(){ | |
|---|---|
| if( getUseLMChroma() ){ | |
| **isLMCMode** | ae(v) |
| if( isLMCMode ) { /* LM chroma mode */ | |
| if( getUseCCMerge() ) { | |
| **cclmMrgFlag** | ae(v) |
| } | |
| if( cclmMrgFlag ) | |
| **cclmMrgIdx** | ae(v) |
| else { | |
| **cclmModeIdx** | ae(v) |
| if ( isCCCMEnabled ) { | |
| **cccmFlag** | ae(v) |
| if ( cccmFlag ) { | |
| **cccmNoSubFlag** | ae(v) |
| if ( !cccmNoSubFlag ) | |
| **glCccmFlag** | ae(v) |
| } | |
| } | |
| if ( hasGlmFlag( ) ) { | |
| **glmFlag** | ae(v) |
| if ( glmFlag ) | |

(continued)

| | |
|---|---|
| **glmIdc** | ae(v) |
| } | |
| if (!cccmFlag && hasCclmDeltaFlag() ) | |
| **cclmDeltaFlags** | ae(v) |
| if (cclmDeltaFlags) { | |
| **bothActiveCelmDelta** | ae(v) |
| if ( bothActiveCclmDelta ) { | |
| cclmOffsetsCbFlag = 1 | |
| cclmOffsetsCrFlag = 1 | |
| } else { | |
| **cclmOffsetsCbFlag** | ae(v) |
| if ( isMultiModeLM() && !cclmOffsetsCbFlag ) | |
| **cclmOffsetsCrFlag** | ae(v) |
| else | |
| cclmOffsetsCrFlag = !cclmOffsetsCbFlag | |
| } | |
| if (cclmOffsetsCbFlag) | |
| cclmDelta(cclmOffsetsCb) | |
| if (cclmOffsetsCrFlag) | |
| cclmDelta(cclmOffsetsCb) | |
| } | |
| } | |
| } else if ( hasChromaBvFlag() ){ | |
| **DBVFlag** | ae(v) |
| if ( hasChromaFusionFlag() ) | |
| **isChromaFusion** | ae(v) |
| } else if ( isDMEnable) { | |
| **DMFlag** | ae(v) |
| if ( hasChromaFusionFlag() ) | |
| intraChromaFusionMode() | |
| } else if ( getUseDimd() ) { | |
| **DimdChromaFlag** | ae(v) |
| if ( hasChromaFusionFlag() ) | |
| intraChromaFusionMode() | |
| } else { | |
| **chromaModeIdx** | u(2) |
| if ( hasChromaFusionFlag() ) | |
| intraChromaFusionMode() | |
| } | |
| } | |

Values of cclmModeIdx in above-mentioned Table 1 and corresponding mode types are shown in Table 2.

Table 2

| value | bin | type |
|---|---|---|
| 0 | 0 | LM |
| 1 | 10 | MMLM |
| 2 | 110 | MDLM L |
| 3 | 1110 | MDLM T |
| 4 | 11110 | MMLM L |
| 5 | 11111 | MMLM T |

The cross-component linear model prediction (CCLM) is introduced below.

The CCLM refers to calculating a chroma prediction sample value based on a reconstructed luma value of a to-be-predicted sample through the linear relationship between reconstructed luma values and reconstructed chroma values of reference samples. Exemplarily, as illustrated in FIG. 6A, for the YUV420 format, a luma component needs to be downsampled to maintain a same spatial resolution as that of chroma components, and then a cross-component prediction model parameter is calculated based on the luma and chroma of the reference sample, and then a chroma prediction value is calculated by using the reconstructed luma value.

Exemplarily, the linear relationship is roughly as shown in formula (1):

$$\text{pred}_C(i, j) = a \cdot \text{rec}_L{}'(i, j) + b \quad (1);$$

where $\text{pred}_c(i,j)$ represents a chroma prediction sample of a current CU, $\text{rec}_L{}'(i,j)$ represents a downsampled and reconstructed luma sample of the current CU, a and b are referred to as cross-component prediction model parameters, where a is a scaling parameter and b is an offset parameter, which are obtained by deriving from neighboring chroma samples and luma samples. Since a linear model used herein may be calculated at the sides of the encoder and decoder, it does not need to be written into the bitstream.

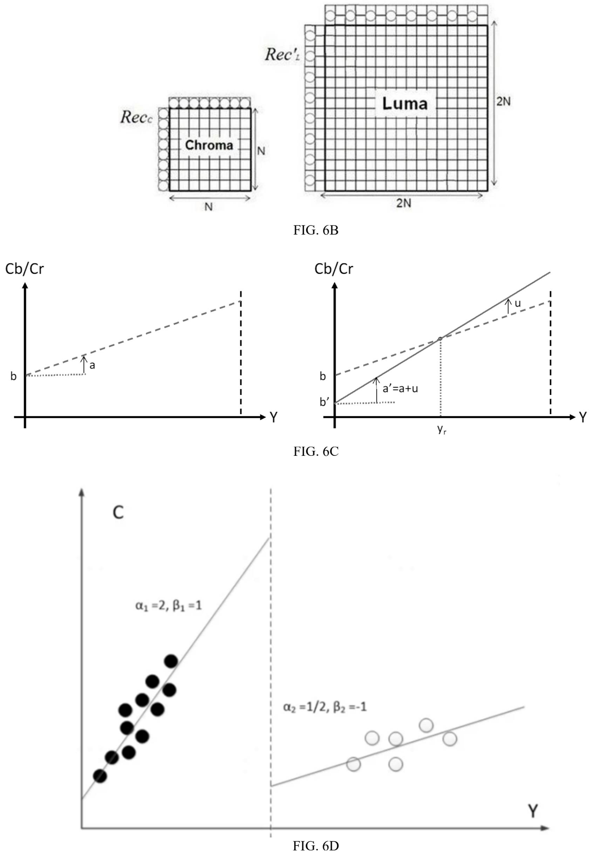

Exemplarily, FIG. 6B is a schematic diagram of a current block and neighboring reconstructed chroma samples and reconstructed luma samples in the CCLM mode. In addition to using all of top reference samples and left reference samples to jointly calculate parameters of the linear model, there are two more manners to calculate the model parameters, that is, CCLM further includes two more modes, referring to as CCLM-T mode and CCLM-L mode.

In CCLM-T mode, only the top reference samples are used to calculate the cross-component prediction model parameters.

In CCLM- L mode, only the top reference samples are used to calculate the cross-component prediction model parameters.

To further improve the encoding efficiency of CCLM, many improvements have been made to CCLM in ECM, including CCLM_SLOPE, MMLM, CCCM, etc. Some of these improvements are briefly introduced below.

In CCLM_SLOPE, the cross-component prediction model parameters obtained through calculation may be adjusted, and a adjustment manner for them is shown in formula (2):

$$a' = a + u, \quad b' = b - u * yr \quad (2)$$

A prediction sample is calculated using the updated cross-component prediction model parameters a' and b'. With this improvement, as illustrated in FIG. 6C, the mapping function is tilted or rotated around a point with a luma value yr, where yr is generally an average value of reference luma samples.

In CCLM, there is only one linear model between the luma and chroma of the same CU. In MMLM, multiple models may be provided for the same CU. Neighboring luma samples and chroma samples are classified into different categories according to a classification threshold, and samples in each category are used to calculate different model parameters. FIG. 6D illustrates an example in which samples are classified for calculating multiple linear models in the MMLM mode.

Another major type of cross-component prediction model is the convolutional cross component model (CCCM). The CCCM, which shares a similar concept with the CCLM technology, is also a process of predicting chroma samples through the reconstructed samples of luma components. However, what is derived in the CCCM is no longer the simple $\alpha$ and $\beta$, but a convolution filter coefficient set, through which the prediction samples are obtained. In the CCCM, deriving two convolution filter coefficient sets from one block is also supported, and similarly, which set of convolution filter coefficients is used is controlled according to a threshold (Threshold).

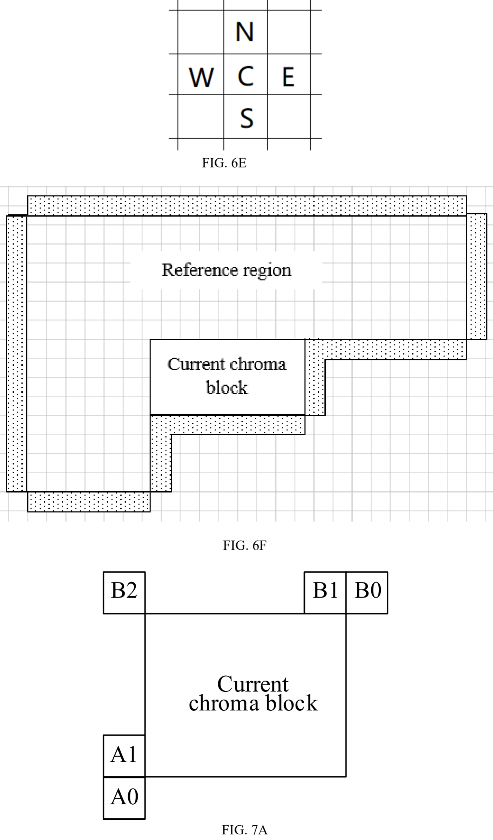

In an example, a convolution filter used in the CCCM is a 7-tap filter, which is composed of a 5-tap cross filter, a nonlinear term, and a bias term. As illustrated in FIG. 6E, the input of the 5-tap cross filter consists of a center (Center, C) luma sample (a downsampled luma sample at a position corresponding to a current chroma prediction position), an above (Above/North, N) luma sample, a below (Below/South, S) luma sample, a left (Left/West, W) luma sample, and a right (Right/East, E) luma sample.

In CCCM, a prediction value is determined by adaptively acquired filter coefficients $\{c_0, ... , c_6\}$ of the 7 taps and input samples. Exemplarily, the prediction value may be determined according to the following formula (3):

$$\text{pred}_C(i, j)= c_0C + c_1N + c_2S + c_3E + c_4W + c_5P + c_6B \quad (3)$$

where $\text{pred}_c(i,j)$ represents a chroma prediction sample of the current CU; C, N, S, E, W are input luma samples of the cross filter illustrated in FIG. 6E, P is the nonlinear term, and B is the bias term.

The nonlinear term P is determined by a bit precision (bitDepth) of the input luma sample C at the center position and a sample value of the current prediction block. For example, the nonlinear term P refers to the second power of the center luma sample C, and is scaled to an appropriate sample value range. Exemplarily, the nonlinear term P is determined by the following formula (4):

$$P = (C \times C + midVal) \gg bitDepth \quad (4)$$

where C is the input luma sample at the center position in FIG. 6E, and bitDepth represents the bit depth. A value of midVal is determined according to a value of the bit depth. Exemplarily, midVal is set to $(1 \ll (bitDepth - 1))$, for example, in a case where a sample precision of the current prediction block is 10 bits, midVal=512.

The bias term B is set to a middle value of a chroma value.

In an example, B=midVal. For example, in a case where the sample precision of the current prediction block is 10 bits, B=512.

The above-mentioned filter coefficients $\{c_0, ... , c_6\}$ are calculated and obtained by minimizing a total mean square error (MSE) between chroma prediction values and the reconstructed values of a reconstructed region.

Exemplarily, the filter coefficients $\{c_0, ... , c_6\}$ are calculated and obtained by the following formula (5):

$$MSE = E[(predC[i] - recC[i])^2] = E[(\sum_{n=0}^{6} c_n \Box refL[n] - recC[i])^2] \quad (5);$$

where *predC* is the chroma prediction value, *recC* is the reconstructed chroma value, and *refL* is the reconstructed luma value.

In an example, as illustrated in FIG. 6F, a reference region generally includes 6 rows and 6 columns of reconstructed samples around the current chroma block, as well as a top-right extension region and a bottom-left extension region. The grey region represents a spatial component extension section used in the convolution filter. The filter coefficients are calculated and obtained by minimizing the MSE between prediction chroma samples and reconstructed chroma samples in the reference region. And the MSE minimization is achieved by calculating an autocorrelation matrix of the input luma and a cross-correlation vector between the input luma and the output chroma.

The calculation process of minimizing the mean square error includes:

step 1: acquiring the autocorrelation matrix of the input luma samples, and the cross-correlation vector between the input luma samples and the output chroma samples; and
step 2: decomposing the autocorrelation matrix though LDL, and the final filter coefficients are obtained by back-banding.

Exemplarily, the filter coefficients $\{c_0, ..., c_6\}$ are determined by the following formula (6):

$$\begin{bmatrix} \sum_{i \in R}(refL[i][0] \cdot refL[i][0]) & \sum_{i \in R}(refL[i][1] \cdot refL[i][0]) & \cdots & \sum_{i \in R}(refL[i][6] \cdot refL[i][0]) \\ \sum_{i \in R}(refL[i][0] \cdot refL[i][1]) & \sum_{i \in R}(refL[i][1] \cdot refL[i][1]) & \cdots & \sum_{i \in R}(refL[i][6] \cdot refL[i][1]) \\ \vdots & \vdots & \ddots & \vdots \\ \sum_{i \in R}(refL[i][0] \cdot refL[i][6]) & \sum_{i \in R}(refL[i][1] \cdot refL[i][6]) & \cdots & \sum_{i \in R}(refL[i][6] \cdot refL[i][6]) \end{bmatrix} \cdot \begin{bmatrix} c_0 \\ c_1 \\ \vdots \\ c_6 \end{bmatrix} = \begin{bmatrix} \sum_{i \in R}(recC[i] \cdot refL[i][0]) \\ \sum_{i \in R}(recC[i] \cdot refL[i][1]) \\ \vdots \\ \sum_{i \in R}(recC[i] \cdot refL[i][6]) \end{bmatrix}$$

$$(6)$$

where $\begin{bmatrix} \sum_{i \in R}(refL[i][0] \cdot refL[i][0]) & \sum_{i \in R}(refL[i][1] \cdot refL[i][0]) & \cdots & \sum_{i \in R}(refL[i][6] \cdot refL[i][0]) \\ \sum_{i \in R}(refL[i][0] \cdot refL[i][1]) & \sum_{i \in R}(refL[i][1] \cdot refL[i][1]) & \cdots & \sum_{i \in R}(refL[i][6] \cdot refL[i][1]) \\ \vdots & \vdots & \ddots & \vdots \\ \sum_{i \in R}(refL[i][0] \cdot refL[i][6]) & \sum_{i \in R}(refL[i][1] \cdot refL[i][6]) & \cdots & \sum_{i \in R}(refL[i][6] \cdot refL[i][6]) \end{bmatrix}$ is the autocorrelation

matrix of the input luma samples, and $\begin{bmatrix} \sum_{i \in R}(recC[i] \cdot refL[i][0]) \\ \sum_{i \in R}(recC[i] \cdot refL[i][1]) \\ \vdots \\ \sum_{i \in R}(recC[i] \cdot refL[i][6]) \end{bmatrix}$ is the cross-correlation vector between the input luma samples and the output chroma samples.

For the calculation for the autocorrelation matrix, since the value of the input luma samples used are relatively large, a greater accuracy is required when calculating the convolution filter coefficients. Therefore, in CCCM, the input luma samples and the output chroma samples need to be subtracted from corresponding offset values offsetLuma, offsetCb, and offsetCr. The reconstructed luma value and chroma prediction value outside the top-left corner of the current prediction block are used as biases, so that the inputs of the CCCM become as follows:

C' = C - offsetLuma
N' = N - offsetLuma
S' = S - offsetLuma
E' = E - offsetLuma
W' = W - offsetLuma
P' = nonLinear(C')
B = midValue = 1 << (bitDepth - 1)

The chroma prediction value is calculated by the following formula (7):

$$\mathrm{pred}_C(i, j) = c0C' + c1N' + c2S' + c3E' + c4W' + c5P' + c6B + \mathrm{offsetChroma} \ (7);$$

where offsetChroma is an offset for Cb component and Cr component, respectively.

In the CCCM, two filter coefficient sets for one block is also supported, for example, using a certain set of coefficients under the control of a threshold similar to MMLM.

Since the filter coefficients $c_0$, ..., $c_6$ of CCCM, as well as some of the threshold and the second set of parameters may be derived, they do not need to be parsed from the bitstream.

There are also a variety of derivative variations of the cross-component prediction model based on the convolutional model, including GLM, or the like. GLM is a tool for intra chroma cross-component prediction in the YUV4:2:0 format. In the ECM reference software (i.e., a reference software, which is based on the VTM-10.0 reference software, integrating various new tools for further exploring the encoding and decoding performance), GLM includes a two-parameter model and a three-parameter model.

Similar to CCLM, different reference region shapes may be selected for use in the CCCM, that is, there are CCCM-T and CCCM-L modes. Similarly, multiple parameter models may also be selected for use in the CCCM, that is, there is an MM-CCCM mode, and in this mode, the specific convolution filter used for the current input sample is determined according to the threshold, so as to obtain the final prediction sample value.

Cross-component Prediction Merge mode (CCP merge mode)

In the various cross-component linear model prediction modes introduced above, all cross-component prediction model parameters (CCP model parameters) are calculated and obtained by using neighboring reconstructed luma samples and reconstructed chroma samples. Based on this, a technology referred as the cross-component prediction merge mode is proposed as a new cross-component prediction mode, in which the cross-component prediction model parameter(s) of a current coding block may be directly inherited from a reconstructed block instead of calculation. A flag is used to indicate whether the cross-component prediction merge mode is used for the current block. In a case where the flag is true, that is, a predication mode for the current block is the cross-component prediction merge mode, a cross-component prediction model parameter list ccmList[NUM_LMC_MERGE_CANDS] is constructed for the current block, and the list is padded with existing cross-component prediction model parameters from neighboring coding blocks in spatial domain, non-neighboring coding blocks in the spatial domain and a historical information list. The upper limit (NUM_LMC_MERGE_CANDS) of a number of candidates in the existing list is 12 by default. If the list has not been filled through the above-mentioned process, preset default parameters are further padded in the list, and specific parameters to be used are indicated by candidate indexes.

The manner of padding the candidate list is as follows.

1. Neighboring candidates in spatial domain

First, neighboring blocks in spatial domain are checked, where positions of the neighboring blocks are illustrated in FIG. 7A, and a checking order is B1->A1->B0->A0->B2.

2. Non-neighboring candidates in spatial domain

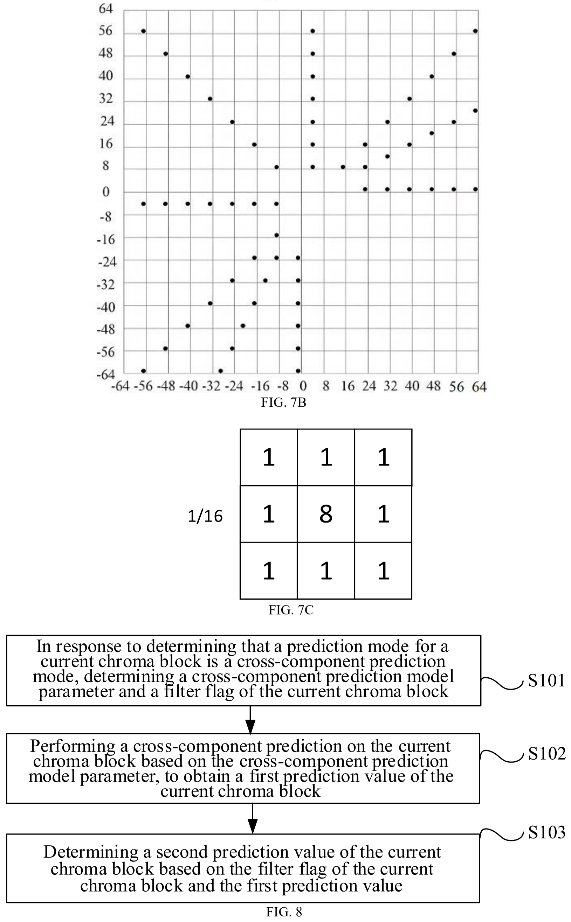

After all neighboring candidates in spatial domain have been checked, non-neighboring candidates in spatial domain are considered, where the position relationship is illustrated in FIG. 7B.

3. Parameter candidates based on historical information

A historical information-based table is maintained to contain a most recently used cross-component prediction model parameter, and the table is reset at the beginning of each CTU row. In a case where a current list is not filled after being padded with neighboring and non-neighboring candidates in spatial domain, cross-component prediction model parameters in the history-based table are added to the list.

4. Default parameter CCLM candidate

If the list is further unfilled, CCLM candidates with default scaling parameters are considered after checking the neighboring and non-neighboring candidates in spatial domain. The default scaling parameters are {0, 1/8, -1/8, 2/8, -2/8, 3/8}. If there are candidates in the CCLM type in the previous construction process for the list, a scaling parameter of a first added candidate in the CCLM type (denoted by $a_{first\neg}$ herein) is adjusted and added to the candidate list, and in the case, the scaling parameters are {0, $a_{first}$ + {1/8, -1/8, 2/8, -2/8, 3/8, -3/8, 4/8, -4/8, 5/8, -5/8, 6/8} }.

The rule of inheriting the parameter are as follows:

in a case of inheriting a CCLM candidate, only the scaling parameters are inherited and offset parameters are recalculated.
in a case of inheriting an MMLM candidate, corresponding scaling parameters and a classification threshold are inherited; offset parameters are recalculated, but if no neighboring reconstructed samples are available to use in a corresponding category, the offset parameters are also directly inherited.
in a case of inheriting a CCCM candidate, all convolution parameters and a classification threshold are inherited.
in a case of inheriting a GLM candidate, all gradient indexes and model parameters are inherited if the GLM is a 3-parameter mode; otherwise, if the GLM is a 2-parameter mode, only the scaling parameters are inherited and the offset parameters need to be recalculated.
in a case of inheriting a chroma fusion mode, MMLM parameters derived from the part of cross-component prediction are inherited as candidates.
in a case of inheriting a CCP merge mode candidate, a inheritance manner depends on a candidate mode it inherits.

Multi-model Cross-component Prediction Mode Filtering

In the cross-component prediction modes introduced above, there is a multi-model mode that may provide multiple models for the same CU, and then a specific cross-component model to be used is determined based on a relationship between reference samples and a threshold, so as to obtain a final prediction value. Since neighboring samples using different cross-component models may result in a final prediction value that is not smooth enough, a 3x3 low-pass filter as illustrated in FIG. 7C is provided for the multi-model cross-component prediction mode. This filter is applied to a prediction sample generated according to a cross-component prediction mode. For samples at a boundary of the prediction sample, the filtering process may involve surrounding neighboring reconstructed samples. For samples inside the prediction sample, the filtering process only involves the internal prediction samples. For absent samples, internal prediction samples are used for padding according to specific situations. In the multi-model cross-component prediction mode that meets the condition, whether to use this mode is indicated by encoding a flag bit ccInsideFilter. If a value of the ccInsideFilter is 1, it means that the predicted sample value needs to be filtered; and if the value of the ccInsideFilter is 0, it means that the predicted sample value does not need to be filtered.

Chroma Fusion Mode

Generally, the chroma prediction mode may be classified into two types: one is a cross-component prediction mode, and another is a non-cross component prediction mode. The non-cross component prediction mode generally includes a Planar mode, a DC mode, a horizontal mode, a vertical mode, a DIMD mode, or the like. If the non-cross component prediction mode is adopted for the current block, it is necessary to further parse a flag bit of the chroma fusion mode, and syntaxes related to the chroma fusion mode is shown in Table 3.

Table 3

| intraChromaFusionMode() { | |
|---|---|
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |
| isChromaFusion = chromaFusionFlag + chromaFusionType + chromaFusionCclm | |

The isChromaFusion in Table 3 above is the flag bit of the chroma fusion mode.
The corresponding relationship between the value of isChromaFusion and the fusion mode is illustrated in Table 4.

Table 4

| Value | Name |
|---|---|
| 0 | Disable |
| 1 | Preset weights |
| 2 | Single Linear model |
| 3 | Multiple Linear model |

Specifically, in a case where a value of chromaFusionFlag is 0, the value of the flag bit isChromaFusion is 0, it means that the chroma fusion mode is not used.
In a case where the value of chromaFusionFlag is 1, and a value of chromaFusionType is 0, the value of the flag bit isChromaFusion is 1, it means that a weighted chroma fusion mode is used. The working principle of this mode is to combine the current non-cross component prediction mode and a cross-component prediction mode, so as to obtain a final prediction result. Exemplarily, a combination manner is shown in formula (8):

$$pred = (w0 * pred0 + w1 * pred1 + (1 \ll (shift - 1))) \gg shift \quad (8);$$

where pred0 represents a prediction value of the current non-cross component prediction mode, pred1 represents a prediction value of the cross-component prediction mode. In an example, the cross-component prediction mode is MMLM by default, and pred is the final prediction result of the current chroma block. Weights w0 and w1 are determined according to conditions of a prediction mode adopted for the neighboring blocks, where w0+w1=4, and shift=2. In a case where both left neighboring blocks and top neighboring block are processed by adopting the cross-component prediction mode, {w0, w1}={1, 3}; in a case where both the left neighboring blocks and the top neighboring blocks are processed by adopting the non-cross component prediction mode, {w0, wl}={3, 1}; and in other cases, {w0, wl}={2, 2}. Furthermore, parameters in the cross-component prediction mode in this example may be inherited.

In a case where the value of chromaFusionFlag is 1, the value of chromaFusionType is 1, and the value of chromaFusionCclm is 0, the value of the flag bit isChromaFusion is 2, it means that to the single linear model chroma fusion mode is used.

In a case where the value of chromaFusionFlag is 1, the value of chromaFusionType is 1, and the value of chromaFusionCclm is 1, the value of the flag bit isChromaFusion is 3, it means that to the multi-linear model chroma fusion mode is used.

The working principle of the linear model chroma fusion mode is to combine the current non-cross component prediction mode and the reconstructed luma sample value, so as to obtain the final prediction result. Exemplarily, the combination manner for this case is shown in formula (9):

$$pred_C = a \cdot rec_L' + b \cdot pred_C' + c \cdot midValue \qquad (9);$$

where $pred_C$ represents the final prediction result, $rec_L'$ represents the reconstructed luma sample value, $pred_C'$ represents the chroma prediction sample value obtained according to the non-cross component prediction mode, midValue is a default value determined by the bitdepth (the value of midValue is generally 512 in a case where the bitdepth is 10); and a, b, and c are model parameters. In a case where the flag bit "isChromaFusion" is 2, it means a single linear model, that is, there is only one set of model parameters; and in a case where the flag bit "isChromaFusion" is 3, it means a multi-linear model, that is, there are multiple sets of model parameters, where samples are classified according to the threshold, and each model parameter set is used for corresponding classified samples.

Chroma Fusion Derivation mode

In the chroma fusion mode introduced above, for the case where the flag bit of chroma fusion mode is 1, there is also a cross-component prediction merge mode. In this mode, the cross-component prediction model parameter of the part of the cross-component prediction in the chroma fusion mode may be either obtained by calculation or inherited from the cross-component prediction model parameter of the reconstructed block. Herein, the candidate list in the chroma fusion derivation mode is constructed in the same manner as constructing the candidate list in the cross-component prediction merge mode.

Exemplarily, relevant syntax elements are shown in Table 5.

Table 5

| intraChromaFusionMode() { | |
|---|---|
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |
| isChromaFusion = chromaFusionFlag + chromaFusionType + chromaFusionCclm | |
| if ( isChromaFusion == 1) { | |
| **chromaFusionMrgFlag** | ae(v) |
| if ( chromaFusionMrgFlag) | |
| **chromaFusionMrgIdx** | ae(v) |
| } | |

(continued)

| | |
|---|---|
| } | |

As shown in Table 5, in a case where the value of the flag bit isChromaFusion is 1, an additional flag bit chromaFusionMrgFlag is introduced to indicate whether to use the chroma fusion derivation mode. If the flag bit chromaFusionMrgFlag is 1, a candidate index flag chromaFusionMrgIdx is continued to be parsed, so as to indicate a position of a reference cross-component prediction model parameter in the candidate list, thereby determining an inherited cross-component prediction model parameter.

Exemplarily, a relationship between the value of chromaFusionMrgIdx and an encoding binary (bin) is shown in Table 6.

Table 6

| value | bin |
|---|---|
| 0 | 0 |
| 1 | 10 |
| 2 | 110 |
| 3 | 1110 |
| 4 | 11110 |
| 5 | 11111 |

Each bin in the index flag in Table 6 above is context-encoded using a separate context.

The current multi-model cross-component prediction filtering technology only works in the traditional cross-component prediction mode, in which a flag bit is usually used to indicate the specific cross-component prediction mode. This technology is not introduced in the cross-component prediction merge mode, and the role of this filtering technology is not fully utilized.

The cross-component prediction method introduced above may predict the chroma component using the luma component, but there are problems in the prediction process such as inaccurate prediction and unsatisfactory prediction effect. Although the multi-model cross-component prediction filtering technology is proposed above, this filtering technology only works in the traditional multi-model cross-component prediction mode, and the multi-model cross component prediction filtering technology indicates filtering information to the decoder side through the bitstream via the encoder side, resulting in a waste of bitstream resources and affecting the encoding performance.

In order to solve the above technical problems, in the embodiments of the present disclosure, upon performing prediction on the current chroma block using the cross-component prediction mode, the cross-component prediction model parameter and the filter flag of the current chroma block are determined; where the filter flag of the current chroma block is determined based on the filter flag of the decoded picture block around the current chroma block, and is used to indicate whether to perform filtering on the prediction value obtained based on the cross-component prediction mode; then, based on the cross-component prediction model parameter, the cross-component prediction is performed on the current chroma block to obtain the first prediction value of the current chroma block; and then, based on the filter flag and the first prediction value of the current chroma block, the second prediction value of the current chroma block is determined. That is, in the embodiments of the present disclosure, not only the chroma prediction value obtained from the multi-model cross-component prediction mode is filtered, but also the chroma prediction value obtained from other cross-component prediction modes (e.g., the cross-component prediction merge mode, and the chroma fusion derivation mode) is filtered, thereby improving the accuracy of cross-component prediction and improving the encoding and decoding performance. In addition, in the embodiments of the present disclosure, the filter flag of the current chroma block is obtained by inheriting the filter flag of the encoded or decoded block, without introducing additional bit consumption to indicate the filter flag, thereby saving codewords and improving encoding efficiency.

Referring to FIG. 8, a video decoding method provided in the embodiments of the present disclosure is introduced below by taking the decoder side as an example.

FIG. 8 is a flowchart of a video decoding method provided in an embodiment of the present disclosure, and the embodiment of the present disclosure is applied to the video decoder illustrated in FIG. 1 and the video decoder illustrated in FIG. 3. As illustrated in FIG. 8, the method in the embodiment of the present disclosure includes the following S101-S103.

In S101, in response to determining that a prediction mode for a current chroma block is a cross-component prediction mode, a cross-component prediction model parameter and a filter flag of the current chroma block are determined.

In the embodiments of the present disclosure, upon performing decoding on the current block, the decoder side first performs prediction decoding on a luma component of the current block, to obtain a reconstructed luma value of the current block. Next, prediction decoding on a chroma component of the current block is performed.

In the embodiments of the present disclosure, the chroma component of the current block is referred to as the current chroma block.

Before performing the prediction decoding on the current chroma block, the prediction mode for the current chroma block is first determined.

The specific manner of determining the prediction mode for the current chroma block is not limited in the embodiments of the present disclosure.

In an example, a default prediction mode is determined as the prediction mode for the current chroma block. That is, in the embodiments of the present disclosure, both the encoder side and the decoder side perform prediction on the current chroma block using the default prediction mode. For example, both the encoder side and the decoder side give tacit consent to the prediction mode for the current chroma block being the cross-component prediction mode.

In an example, the encoder side determines a prediction mode with a lowest cost from multiple candidate prediction modes as the prediction mode for the current chroma block. Meanwhile, the encoder side encodes indication information of this prediction mode into a bitstream, for example, encoding a mode index of this prediction mode into the bitstream. In this case, the decoder side obtains the prediction mode for the current chroma block by decoding the bitstream.

It can be seen from the above that the cross-component prediction mode includes modes such as a CCLM mode, a CCCM mode, a GLM mode, a CCMerge mode, a chroma fusion derivation mode, etc.

If the cross-component prediction mode adopted by the decoder side is the CCMerge mode or the chroma fusion derivation mode, the decoder side further needs to construct a list to determine the prediction mode for the current chroma block. In light of this, in some cases, the decoder side fails to directly determine the prediction mode for the current chroma block by decoding the bitstream. For example, if the CCMerge mode is obtained by decoding the bitstream, the decoder side further needs to construct a cross-component prediction mode list, and determine a specific cross-component prediction mode for the current chroma block from the list. Therefore, in the embodiments of the present disclosure, the prediction mode obtained by decoding the bitstream is referred to as a first prediction mode for ease of description. In this case, the decoder side decodes the bitstream to obtain the first prediction mode, and then determines the prediction mode for the current chroma block based on the first prediction mode.

That is, in the embodiments of the present disclosure, the prediction mode written into the bitstream by the encoder side is referred to as the first prediction mode for ease of description. As such, the decoder side may directly obtain the first prediction mode by decoding the bitstream. For example, the decoder side performs decoding on the bitstream to obtain a prediction mode index, and determines the first prediction mode based on the prediction mode index. Alternatively, the decoder side performs decoding on the bitstream to obtain at least one prediction mode enable flag, and then determines the first prediction mode based on the at least one prediction mode enable flag. For example, in a case where a CCCM mode enable flag obtained by the decoder side performing decoding on the bitstream is equal to 1, it indicates that the CCCM mode is used, and in this case, the first prediction mode is determined to be the CCCM mode. Alternatively, in a case where a CCMerge mode enable flag obtained by the decoder side performing decoding on the bitstream is equal to 1, it indicates that the CCMerge mode is used, and in this case, the first prediction mode is determined to be the CCMerge mode.

If the first prediction mode is determined to be the CCMerge mode or the chroma fusion derivation mode, a candidate list is constructed, and the specific cross-component prediction mode for the current chroma block is selected from the candidate list. The specific process may refer to the description of the above embodiments.

In the embodiments of the present disclosure, in response to determining that the current chroma block performs prediction on the current chroma block using the cross-component prediction mode, the cross-component prediction model parameter and the filter flag of the current chroma block are determined.

Here, the cross-component prediction model parameter is model parameter(s) used for predicting the current chroma block using the cross-component prediction mode. For example, the model parameter may be "a" and "b" in the above Formula (1).

Here, the filter flag is used to indicate whether to perform filtering on a prediction value obtained based on the cross-component prediction mode. For example, if the filter flag is set to true, that is, the value of the filter flag is 1, it indicates to perform filtering on the prediction value obtained based on the cross-component prediction mode. For another example, if the filter flag is set to false, that is, the value of the filter flag is 0, it indicates to skip filtering on the prediction value obtained based on the cross-component prediction mode.

In the embodiments of the present disclosure, the filter flag of the current chroma block is determined based on a filter flag of a decoded picture block around the current chroma block. That is, in the embodiments of the present disclosure, the filter flag of the current chroma block is inherited from the filter flag of the encoded and decoded block, and the encoder side does not need to introduce additional bit consumption to indicate the filter flag, thereby saving codewords and improving the encoding efficiency.

The process of the decoder side determining the cross-component prediction model parameter and the filter flag of the current chroma block is introduced below.

It can be seen from the above that the cross-component prediction mode includes modes such as the CCLM mode, the CCCM mode, the GLM mode, the CCMerge mode, the chroma fusion derivation mode, etc.

In some embodiments, if the cross-component prediction mode for the current chroma block is a mode such as the CCLM mode, the CCCM mode, or the GLM mode, etc., the decoder side may determine the cross-component prediction model parameter of the current chroma block through calculation, and the calculation process refers to the above description, which will not be repeated herein. As for the filter flag of the current chroma block, it is determined by the decoder side based on the filter flag of the decoded picture block around the current chroma block. That is, the decoder side inherits the filter flag of the decoded picture block as the filter flag of the current chroma block.

In some embodiments, if the cross-component prediction mode for the current chroma block is the CCMerge or a derivation mode such as the chroma fusion derivation mode, etc., the decoder side may derive the cross-component prediction model parameter of the current chroma block based on the cross-component prediction model parameter of the decoded picture block around the current chroma block, and derive a filter coefficient of the current chroma block based on a filter coefficient of the decoded picture block around the current chroma block.

It can be seen from the above that, in some cases, the filter coefficient and the cross-component prediction model parameter of the current chroma block may be determined by the decoder side in two separate steps and may be determined separately. In some cases, the decoder side may simultaneously determine the filter coefficient and the cross-component prediction model parameter of the current chroma block. For example, if the cross-component prediction mode for the current chroma block is the CCMerge or a derivation mode such as the chroma fusion derivation mode, etc., the decoder side may synchronously derive the filter coefficient and cross-component prediction model parameter of the current chroma block.

It can be seen from the above description that in the embodiments of the present disclosure, in a certain case, the process of determining the cross-component prediction model parameter of the current chroma block and the process of determining the filter flag of the current chroma block may be the same process. That is, the cross-component prediction model parameter and the filter flag of the current chroma block are determined together. In another case, the process of determining the cross-component prediction model parameter of the current chroma block and the process of determining the filter flag of the current chroma block are two independent processes. That is, the cross-component prediction model parameter and the filter flag of the current chroma block are determined separately. The two cases are introduced below respectively.

Case 1: the cross-component prediction model parameter and filter flag of the above-mentioned current chroma block are determined together, that is, in the embodiments of the present disclosure, the cross-component prediction model parameter and the filter flag are bound together. In a case where the cross-component prediction model parameter of the current chroma block is determined, a filter flag to which the cross-component prediction model parameter of the current chroma block is bound is determined as the filter flag of the current chroma block. Alternatively, it can be understood that, in this embodiment, the current chroma block may inherit not only the cross-component prediction model parameter of another decoded picture block, but also the filter flag of the decoded picture block. For example, the current chroma block inherits a cross-component prediction model parameter of a decoded picture block 1 around the current chroma block, and also inherits a filter flag of the picture block 1. As such, the decoder side determines the filter flag of the current chroma block while determining the cross-component prediction model parameter of the current chroma block, thereby saving the calculation amount of the decoder side and improving the decoding efficiency.

Based on this, determining the cross-component prediction model parameter and filter flag of the current chroma block in the above S101 includes the following step S101-A.

In S101-A, the cross-component prediction model parameter and the filter flag of the current chroma block are determined based on cross-component prediction information of the decoded picture block around the current chroma block.

Here, the cross-component prediction information includes the cross-component prediction model parameter and the filter flag of the decoded picture block.

In case 1, the cross-component prediction information of the decoded picture block around the current chroma block includes the cross-component prediction model parameter used for the decoded picture block during cross-component prediction, and the filter flag of the decoded picture block, where the filter flag of the decoded picture block is used to indicate whether to perform filtering on a prediction value obtained from the cross-component prediction for the decoded picture block.

In an example, the cross-component prediction information of the decoded picture block around the current chroma block is shown in Table 7.

Table 7

| Decoded picture block | Cross-component prediction information |
| --- | --- |
| Decoded picture block 1 | (cross-component prediction model parameter 1, filter flag 1) |
| Decoded picture block 2 | (cross-component prediction model parameter 2, filter flag 2) |
| ... | ... |

It can be seen from the above Table 7 that cross-component prediction information of each decoded picture block includes a cross-component prediction model parameter used for the corresponding decoded picture block and a filter flag of the corresponding decoded picture block. As such, the decoder side may determine the cross-component prediction model parameter and filter flag of the current chroma block based on the cross-component prediction information of the decoded picture block around the current chroma block. For example, the cross-component prediction model parameter of one decoded picture block among decoded picture blocks around the current chroma block may be determined as the cross-component prediction model parameter of the current chroma block, and a filter flag of this decoded picture block may be determined as the filter flag of the current chroma block.

In the embodiments of the present disclosure, the specific manner of the decoder side determining the cross-component prediction model parameter and filter flag of the current chroma block based on the cross-component prediction information of the decoded picture block around the current chroma block includes but not limited to the following manner 1 to manner 3.

Manner 1: the decoder side gives tacit consent to determine a cross-component prediction model parameter of a certain decoded picture block (e.g., a first decoded picture block) around the current chroma block as the cross-component prediction model parameter of the current chroma block, and determine a filter flag of the first decoded picture block as the filter flag of the current chroma block. A specific type of the first decoded picture block is not limited in the embodiments of the present disclosure. For example, the first decoded picture block is a left neighboring decoded picture block, or a top-left neighboring decoded picture block, or a top neighboring decoded picture block of the current chroma block.

Manner 2: the decoder side gives tacit consent to determine a cross-component prediction model parameter of a certain decoded picture block (e.g., the first decoded picture block) around the current chroma block as the cross-component prediction model parameter of the current chroma block, and the decoder side gives tacit consent to determine a filter flag of another decoded picture block (e.g., a second decoded picture block) around the current chroma block as the filter flag of the current color block. Specific types of the first decoded picture block and the second decoded picture block are not limited in the embodiments of the present disclosure. For example, the first decoded picture block or the second decoded picture block is a left neighboring decoded picture block, or a top-left neighboring decoded picture block, or a top neighboring decoded picture block of the current chroma block, and the first decoded picture block is different from the second decoded picture block. For example, the first decoded picture block is the left neighboring decoded picture block of the current chroma block, the second decoded picture block is the top neighboring decoded picture block of the current chroma block, or the like.

Manner 3: the decoder side determines the cross-component prediction model parameter and the filter flag of the current chroma block through the following S101-A1 to S101-A3.

In S101-A1, a first candidate list is constructed based on the cross-component prediction information of the decoded picture block around the current chroma block, where the first candidate list includes a plurality of candidate cross-component prediction information sets, and each cross-component prediction information set includes a candidate cross-component prediction model parameter set and a candidate filter flag.

In S101-A2, first cross-component prediction information is selected from the plurality of candidate cross-component prediction information sets included in the first candidate list.

In S101-A3, the cross-component prediction model parameter and the filter flag of the current chroma block are determined based on the first cross-component prediction information.

In the implementation, since the cross-component prediction information of the decoded picture block includes the cross-component prediction model parameter and the filter flag of the decoded picture block, the decoder side constructs the first candidate list based on the cross-component prediction information of the decoded picture block around the current chroma block; where the first candidate list includes the plurality of candidate cross-component prediction information sets, where each cross-component prediction information set includes a candidate cross-component prediction model parameter set and a candidate filter flag. Next, the decoder side selects a candidate cross-component prediction information set (which is recorded as the first cross-component prediction information) from the plurality of candidate cross-component prediction information sets included in the constructed first candidate list. As such, the decoder side may determine the cross-component prediction model parameter and the filter flag of the current chroma block based on the selected first cross-component prediction information. Furthermore, the cross-component prediction model parameter and the filter flag of the current chroma block are determined simultaneously, thereby improving the pace of determining the cross-component prediction model parameter and the filter flag of the current chroma block, and improving the decoding efficiency while improving the prediction effect.

In some embodiments, in order to facilitate the management of the cross-component prediction information, in the embodiments of the present disclosure, the cross-component prediction information of the decoded picture block is stored in a same storage space (e.g., a first storage space curCand) of the decoded picture block. That is, the cross-component prediction model parameter and the filter flag of the same decoded picture block are stored in the same storage space of the decoded picture block.

Exemplarily, the cross-component prediction information of the decoded picture block is stored as shown in Table 8.

Table 8

| Decoded picture block | First storage space |
| --- | --- |
| Decoded picture block 1 | First storage space 1: [cross-component prediction model parameter 1, filter flag 1] |
| Decoded picture block 2 | First storage space 2: [cross-component prediction model parameter 2, filter flag 2] |
| ... | ... |

In some embodiments, the cross-component prediction information of the above-mentioned decoded picture block includes not only the cross-component prediction model parameter and the filter flag, but also cross-component prediction mode information of the decoded picture block. Exemplarily, the cross-component prediction mode information of the decoded picture block is also stored in the first storage space of the decoded picture block. In this case, the cross-component prediction information of the decoded picture block is stored as shown in Table 9.

Table 9

| Decoded picture block | First storage space |
| --- | --- |
| Decoded picture block 1 | First storage space 1: [cross-component prediction mode information 1, cross-component prediction model parameter 1, filter flag 1] |
| Decoded picture block 2 | First storage space 2: [cross-component prediction mode information 2, cross-component prediction model parameter 2, filter flag 2] |
| ... | ... |

In the embodiments of the present disclosure, in a case where the cross-component prediction information (e.g., the cross-component prediction model parameter and the filter flags) of the decoded picture block is stored in the first storage space curCand of the decoded picture block, when the decoder side performs the above S101-AI, cross-component prediction information of respective decoded picture blocks is obtained from first storage spaces of the respective decoded picture blocks of the current chroma block, to achieve rapid acquisition for the cross-component prediction information of the decoded picture blocks, so as to construct the first candidate list based on the quickly acquired cross-component prediction information of the decoded picture blocks, thereby improving the construction pace for the first candidate list.

The process of constructing the first candidate list based on the cross-component prediction information of the decoded picture blocks around the current chroma block is introduced below.

The specific type of the decoded picture block around the current chroma block is not limited in the embodiments of the present disclosure.

In some embodiments, the decoded picture block around the current chroma block includes at least one of: a decoded picture on the top of (above) the current chroma block, a decoded picture on the left of the current chroma block, a decoded picture on the top left of the current chroma block, a decoded picture on the bottom left of the current chroma block, or a decoded picture on the top right of the current chroma block.

For example, the decoded picture block around the current chroma block merely includes the decoded picture block on the top of the current chroma block.

For another example, the decoded picture block around the current chroma block merely includes the decoded picture block on the left of the current chroma block.

For yet another example, the decoded picture block around the current chroma block merely includes the decoded picture blocks on the left and bottom left of the current chroma block.

For yet another example, the decoded picture block around the current chroma block merely includes the decoded picture blocks on the left and top left of the current chroma block.

For yet another example, the decoded picture block around the current chroma block merely includes the decoded picture blocks on the left, bottom left, and top left of the current chroma block.

For yet another example, the decoded picture block around the current chroma block merely includes the decoded picture blocks on the top and top left of the current chroma block.

For yet another example, the decoded picture block around the current chroma block merely includes the decoded picture blocks on the top, and top right of the current chroma block.

For yet another example, the decoded picture block around the current chroma block merely includes the decoded picture blocks on the top, top left, and top right of the current chroma block.

As such, the decoder side adds cross-component prediction information of the above-mentioned at least one decoded picture block to the first candidate list.

In some embodiments, the above S101-A1 includes the following steps.

In S101-A11, cross-component prediction information of a neighboring block of the current chroma block in spatial domain is added to the first candidate list according to a first preset order.

In the embodiment, the decoded picture block around the current chroma block includes a neighboring block of the current chroma block in spatial domain. Exemplarily, the neighboring block of the current chroma block in spatial domain are illustrated in FIG. 7A, which includes decoded picture blocks at five positions including A0, A1, B0, B1, and B2 around the current chroma block. It should be noted that, in some embodiments, the neighboring blocks of the current chroma block in spatial domain may also include more neighboring blocks in spatial domain than those illustrated in FIG. 7A, or fewer neighboring blocks in spatial domain than those illustrated in FIG. 7A, or neighboring blocks in spatial domain whose positions are not exactly the same as those of the neighboring blocks in spatial domain illustrated in FIG. 7A, which are not limited in the embodiments of the present disclosure. For ease of description, the neighboring blocks in spatial domain illustrated in FIG. 7A are taken as an example for illustration.

In the embodiment, the decoder side adds pieces of cross-component prediction information of the neighboring blocks of the current chroma block in spatial domain to the first candidate list one by one according to the first preset order, until the length of the first candidate list reaches a preset length. Here, the length of the first candidate list may be understood as a number of pieces of cross-component prediction information included in the first candidate list. When the number of pieces of cross-component prediction information included in the first candidate list reaches a first preset number, no more cross-component prediction information will be added to the first candidate list.

The first preset order is not limited in the embodiments of the present disclosure.

In an example, if the neighboring blocks of the current chroma block in spatial domain are as illustrated in FIG. 7A, the above-mentioned first preset order may be B1→A1→B0→A0→B2. That is, the decoder side sequentially accesses the neighboring blocks in spatial domain at positions B1→A1→B0→A0→B2. In a case where a cross-component intra prediction mode is adopted for the neighboring blocks in spatial domain at these positions, the pieces of cross-component prediction information of these neighboring blocks in spatial domain are sequentially stored in the first candidate list. Exemplarily, the order for storing the pieces of cross-component prediction information in the first candidate list may be consistent with the order for accessing the above-mentioned positions.

In some embodiments, the decoded picture block around the current chroma block further includes non-neighboring blocks of the current chroma block in spatial domain. In a case where the number of pieces of cross-component prediction information included in the first candidate list is less than the first preset number (that is, the length of the first candidate list is shorter than the preset length) when the decoder side adds the cross-component prediction information of the neighboring blocks of the current chroma block in spatial domain to the first candidate list based on the above steps, the decoder side adds cross-component prediction information of a non-neighboring block of the current chroma block in spatial domain to the first candidate list according to a second preset order. The non-neighboring block of the current chroma block in spatial domain includes decoded picture blocks at some non-neighboring positions for the current chroma block that are on the top, top left, top right, left, or bottom left of the current chroma block.

Exemplarily, the non-neighboring blocks of the current chroma block in spatial domain are illustrated in FIG. 7B, and include decoded picture blocks at 60 positions around the current chroma block. It should be noted that, in some embodiments, the non-neighboring blocks of the current chroma block in spatial domain may also include more non-neighboring blocks in spatial domain than those illustrated in FIG. 7B, or fewer non-neighboring blocks in spatial domain than those illustrated in FIG. 7B, or non-neighboring blocks whose positions are not exactly the same as those of the non-neighboring blocks in spatial domain illustrated in FIG. 7B, which are not limited in the embodiments of the present disclosure. For ease of description, the non-neighboring blocks in spatial domain illustrated in FIG. 7B are taken as an example for illustration.

In the embodiment, in a case where the number of pieces of cross-component prediction information included in the first candidate list is less than the first preset number after the decoder side adds the pieces of cross-component prediction information of the neighboring blocks of the current chroma block in spatial domain to the first candidate list based on the above steps, the decoder side adds the pieces of cross-component prediction information of the non-neighboring blocks of the current chroma block in spatial domain to the first candidate list one by one according to the second preset order, until the number of pieces of cross-component prediction information included in the first candidate list is equal to the first preset number.

In some embodiments, in a case where the number of pieces of cross-component prediction information included in the first candidate list is still less than the first preset number after the decoder side adds the cross-component prediction information of the neighboring blocks and the non-neighboring blocks of the current chroma block in spatial domain to the first candidate list, the decoder side adds cross-component prediction information most recently used by the decoder side to the first candidate list, until the number of pieces of cross-component prediction information included in the first candidate list is equal to the first preset number.

In the embodiments of the present disclosure, the decoder side maintains a historical information-based table, where the table includes the cross-component prediction information most recently used by the decoder side. As such, in a case where the number of pieces of cross-component prediction information included in the first candidate list is still less than the first preset number after the decoder side adds the cross-component prediction information of the neighboring blocks and the non-neighboring blocks of the current chroma block in spatial domain to the first candidate list, one or more pieces of cross-component prediction information most recently used by the decoder side are selected from the historical information-based table and added to the first candidate list by the decoder side.

In some embodiments, in a case where the number of pieces of cross-component prediction information included in the first candidate list is still less than the first preset number after the decoder side adds the cross-component prediction information most recently used by the decoder side to the first candidate list, the embodiments of the present disclosure further include the following steps.

In step 1, the decoder side acquires at least one default cross-component prediction model parameter set.

In step 2, for an i-th cross-component prediction model parameter set in the at least one cross-component prediction model parameter set, a filter flag corresponding to the i-th cross-component prediction model parameter set is determined, and the i-th cross-component prediction model parameter set and the filter flag corresponding to the i-th cross-component prediction model parameter set are combined to form an i-th cross-component prediction information set, i is a positive integer.

In the embodiments of the present disclosure, some default cross-component prediction model parameters (e.g., a default CCLM cross-component prediction model parameter) are further included.

Since the default cross-component prediction model parameter merely includes cross-component prediction model parameters, but does not include a filter flag, the decoder side needs to determine a filter flag corresponding to each cross-component prediction model parameter set in the at least one cross-component prediction model parameter set. Here, processes of determining filter flags corresponding to respective cross-component prediction model parameter sets in the at least one cross-component prediction model parameter set are consistent. For ease of description, the process of determining the filter flag corresponding to the i-th cross-component prediction model parameter set is taken as an example for illustration.

The specific manner for the decoder side to determine the filter flag corresponding to the i-th cross-component prediction model parameter set is not limited in the embodiments of the present disclosure.

In an example, the decoder side determines a default value to be a value of the filter flag corresponding to the i-th cross-component prediction model parameter set. The default value may be a first value or a second value.

For example, the decoder side determines that the value of the filter flag corresponding to the i-th cross-component prediction model parameter set is the first value (e.g., 1), which is used to indicate to perform filtering on the prediction value obtained from the cross-component prediction mode.

For another example, the decoder side determines that the value of the filter flag corresponding to the i-th cross-component prediction model parameter set is the second value (e.g., 0), which is used to indicate to skip filtering on the prediction value obtained from the cross-component prediction mode.

Based on the above steps, the decoder side may determine a filter flag corresponding to each cross-component prediction model parameter set in the at least one cross-component prediction model parameter set. Next, each cross-component prediction model parameter set in the at least one cross-component prediction model parameter set and the filter flag corresponding to the cross-component prediction model parameter set are determined as a cross-component prediction information set, so that at least one cross-component prediction information set is obtained.

In step 3, the at least one determined cross-component prediction information set is added to the first candidate list.

The decoder side determines the first candidate list based on the above steps, and continues to perform the above S101-A2 to select the first cross-component prediction information from the plurality of candidate cross-component prediction information sets included in the first candidate list.

The specific manner for the decoder side to select the first cross-component prediction information from the plurality of candidate cross-component prediction information sets included in the first candidate list is not limited in the embodiments of the present disclosure.

In a possible implementation, both the encoder side and the decoder side give tacit consent to determine a certain candidate cross-component prediction information set among the plurality of candidate cross-component prediction information sets included in the first candidate list as the first cross-component prediction information. For example, a first candidate cross-component prediction information set or a second candidate cross-component prediction information set included in the first candidate list is determined as the first cross-component prediction information by default.

In a possible implementation, after selecting the first cross-component prediction information from the first candidate list, the encoder side writes an index of the first cross-component prediction information in the first candidate list into the bitstream. As such, the decoder side obtains the index of the first cross-component prediction information by decoding the bitstream; and then selects the first cross-component prediction information from the above-mentioned constructed first candidate list based on the index of the first cross-component prediction information.

After selecting the first cross-component prediction information from the plurality of candidate cross-component prediction information sets included in the first candidate list based on the above steps, the decoder side performs the above S101-A3.

It can be seen from the above that the first cross-component prediction information in the embodiments of the present disclosure includes a cross-component prediction model parameter set and a filter flag. Based on this, the above S101-A3 includes at least the following implementation manners.

Manner 1: the decoder side directly determines the cross-component prediction model parameter included in the first cross-component prediction information as the cross-component prediction model parameter of the current chroma block, and determines the filter flag included in the first cross-component prediction information as the filter flag of the current chroma block.

Manner 2: the decoder side performs modification on the cross-component prediction model parameter included in the first cross-component prediction information, and determines the modified cross-component prediction model parameter as the cross-component prediction model parameter of the current chroma block. At the same time, the filter flag included in the first cross-component prediction information is determined as the filter flag of the current chroma block.

In some embodiments, in a case where a cross-component prediction model parameter and a filter flag of a same picture block are stored in a first storage space of the picture block, then, after determining the cross-component prediction model parameter and the filter flag of the current chroma block based on the above steps, the decoder side stores the cross-component prediction model parameter and the filter flag of the current chroma block in the first storage space of the current chroma block, so as to facilitate the subsequent determination for cross-component prediction model parameters and filter flags of other chroma blocks.

The specific representation for the filter flag of the current chroma block is not limited in the embodiments of the present disclosure.

In an example, a field, i.e., curCand.ccInsideFilter is used to represent the filter flag.

The process of the decoder side synchronously determining the cross-component prediction model parameter and the filter flag of the current chroma block in case 1 is introduced above.

In case 2, the decoder side determines the cross-component prediction model parameter and the filter flag of the current chroma block separately, and in this case, the above S101 includes the following S101-B1 and S101-B2.

In S101-B1, the cross-component prediction model parameter of the current chroma block is determined.

In S101-B2, the filter flag of the current chroma block is determined based on the filter flag of the decoded picture block around the current chroma block.

In the case 2, the decoder side determines the cross-component prediction model parameter of the current chroma block and determines the filter flag of the current chroma block in two steps. Here, the decoder side may first determine the cross-component prediction model parameter of the current chroma block, and then determine the filter flag of the current chroma block. Alternatively, the filter flag of the current chroma block may be determined first, and then the cross-component prediction model parameter of the current chroma block may be determined. Alternatively, the decoder side determines the cross-component prediction model parameter and filter flag of the current chroma block in parallel, which is not limited in the embodiments of the present disclosure.

Here, the manner of determining the cross-component prediction model parameter of the current chroma block in above-mentioned S101-B1 includes but is not limited to the following.

Manner 1: the encoder side writes the cross-component prediction model parameter of the current chroma block into the bitstream. As such, the decoder side may obtain the cross-component prediction model parameter of the current chroma block by decoding the bitstream.

Manner 2: the decoder side performs calculation based on a decoded reference pixel around the current chroma block and a corresponding luma component to obtain the cross-component prediction model parameter of the current chroma block. The specific calculation process may refer to the description of the above related embodiments.

Manner 3: the decoder side inherits the cross-component prediction model parameter of the decoded picture block as the cross-component prediction model parameter of the current chroma block.

Specifically, the decoder side constructs a cross-component prediction model parameter candidate list in the same manner as constructing the first candidate list described above. For example, the decoder side sequentially adds, according to a preset order, a cross-component prediction model parameter of a neighboring block of the current chroma block in spatial domain, a cross-component prediction model parameter of a non-neighboring block of the current chroma block in spatial domain, a most recently used cross-component prediction model parameter, and a default cross-component prediction model parameter to the cross-component prediction model parameter candidate list, until a length of the cross-component prediction model parameter candidate list reaches a preset length. Next, the decoder side decodes the bitstream to obtain the index of the cross-component prediction model parameter of the current chroma block in the cross-component prediction model parameter candidate list, and then based on the index, determines the cross-component prediction model parameter of the current chroma block from the constructed cross-component prediction model parameter candidate list.

The process of the decoder side determining the filter flag of the current chroma block is introduced below.

The manner of determining the filter flag of the current chroma block based on the filter flag of the decoded picture block around the current chroma block in the above S101-B2 includes but is not limited to the following.

Manner 1: the decoder side gives tacit consent to determine a filter flag of a certain decoded picture block around the current chroma block as the filter flag of the current chroma block. For example, the decoder side gives tacit consent to determine a filter flag of a decoded picture block on the top of the current chroma block as the filter flag of the current chroma block. For another example, the decoder side gives tacit consent to determine a filter flag of a decoded picture block on the left of the current chroma block as the filter flag of the current chroma block. For yet another example, the decoder side gives tacit consent to determine a filter flag of a decoded picture block on the top-left corner of the current chroma block as the filter flag of the current chroma block. For yet another example, the decoder side gives tacit consent to determine a filter flag of a decoded picture block on the top-right corner of the current chroma block as the filter flag of the current chroma block.

Manner 2: the above S101-B2 includes the following S101-B21 and S101-B22.

In S101-B21, a second candidate list is constructed based on the filter flag of the decoded picture block around the current chroma block, where the second candidate list includes a plurality of candidate filter flags.

In S101-B22, a certain candidate filter flag is selected from the second candidate list, and is determined as the filter flag of the current chroma block.

In manner 2, the decoder side may construct the second candidate list based on the filter flag of the decoded picture block around the current chroma block (the second candidate list may be understood as a filter flag candidate list), and then the decoder side selects the filter flag of the current chroma block from candidate filter flags included in the second candidate list.

The process of the decoder side constructing the second candidate list based on the filter flag of the decoded picture block around the current chroma block is introduced below.

The specific type of the decoded picture block around the current chroma block is not limited in the embodiments of the present disclosure.

In some embodiments, the decoded picture block around the current chroma block includes at least one of: a decoded picture on the top of the current chroma block, a decoded picture on the left of the current chroma block, a decoded picture on the top left of the current chroma block, a decoded picture on the bottom left of the current chroma block, or a decoded picture on the top right of the current chroma block. As such, the decoder side adds at least one filter flag of the at least one of the decoded picture block to the second candidate list.

In some embodiments, the above S101-B21 includes the following steps.

In S101-B211, a filter flag of a neighboring block of the current chroma block in spatial domain is added to the second candidate list according to a third preset order.

In the embodiment, the decoded picture block around the current chroma block includes neighboring blocks of the current chroma block in spatial domain. Exemplarily, the neighboring block of the current chroma block in spatial domain are illustrated in FIG. 7A, which includes decoded picture blocks at five positions including A0, A1, B0, B1, and B2 around the current chroma block. It should be noted that, in some embodiments, the neighboring blocks of the current chroma block in spatial domain may also include more neighboring blocks in spatial domain than those illustrated in FIG. 7A, or fewer neighboring blocks in spatial domain than those illustrated in FIG. 7A, or neighboring blocks in spatial domain whose positions are not exactly the same as those of the neighboring blocks in spatial domain illustrated in FIG. 7A, which are not limited in the embodiments of the present disclosure. For ease of description, the neighboring blocks in spatial domain illustrated in FIG. 7A are taken as an example for illustration.

In the embodiment, the decoder side adds the filter flag of the neighboring blocks of the current chroma block in spatial domain to the second candidate list one by one according to the third preset order, until the length of the second candidate list reaches a preset length. That is, when the number of filter flags included in the second candidate list reaches a second preset number, no more filter flag will be added to the second candidate list.

The second preset order is not limited in the embodiments of the present disclosure.

In an example, if the neighboring blocks of the current chroma block in spatial domain are as illustrated in FIG. 7A, the above-mentioned second preset order may be B1→A1→B0→A0→B2. That is, the decoder side sequentially accesses the neighboring blocks in spatial domain at positions B1→A1→B0→A0→B2. If a cross-component intra prediction mode is adopted for the neighboring blocks in spatial domain at these positions, filter flags of these neighboring blocks in spatial domain are sequentially stored in the second candidate list. Exemplarily, the order for storing the filter flags in the second candidate list may be consistent with the order for accessing the above-mentioned positions.

In some embodiments, the decoded picture block around the current chroma block further includes non-neighboring blocks of the current chroma block in spatial domain. In a case where the number of filter flags included in the second candidate list is less than the second preset number (that is, the length of the second candidate list is shorter than the preset length) when the decoder side adds the filter flags of the neighboring blocks of the current chroma block in spatial domain to the second candidate list based on the above steps, the decoder side adds a filter flag of a non-neighboring block of the current chroma block in spatial domain to the second candidate list according to a fourth preset order. The non-neighboring block of the current chroma block in spatial domain includes decoded picture blocks at some non-neighboring positions for the current chroma block that are on the top, top left, top right, left, or bottom left of the current chroma block.

Exemplarily, the non-neighboring blocks of the current chroma block in spatial domain are illustrated in FIG. 7B, and include decoded picture blocks at 60 positions around the current chroma block. It should be noted that, in some embodiments, the non-neighboring blocks of the current chroma block in spatial domain may also include more non-neighboring blocks in spatial domain than those illustrated in FIG. 7B, or fewer non-neighboring blocks in spatial domain than those illustrated in FIG. 7B, or non-neighboring blocks whose positions are not exactly the same as those of the non-neighboring blocks in spatial domain illustrated in FIG. 7B, which are not limited in the embodiments of the present disclosure. For ease of description, the non-neighboring blocks in spatial domain illustrated in FIG. 7B are taken as an example for illustration.

In the embodiment, in a case where the number of filter flags included in the second candidate list is less than the second preset number after the decoder side adds the filter flags of the neighboring blocks of the current chroma block in spatial domain to the second candidate list based on the above steps, the decoder side adds the filter flags of the non-neighboring blocks of the current chroma block in spatial domain to the second candidate list one by one according to the fourth preset order, until the number of filter flags included in the second candidate list is equal to the second preset number.

In some embodiments, in a case where the number of filter flags included in the second candidate list is still less than the second preset number after the decoder side adds the filter flags of the neighboring blocks and the non-neighboring blocks of the current chroma block in spatial domain to the second candidate list, the decoder side adds a filter flag most recently used by the decoder side to the second candidate list. That is, in the embodiments of the present disclosure, the decoder side may maintain a table for storing filter flags most recently used by the decoder side. As such, when constructing the second candidate list, a filter flag most recently used by the decoder side may be acquired from the table and added to the second candidate list.

In some embodiments, in a case where the number of filter flags included in the second candidate list is less than the second preset number after the decoder side adds the filter flag most recently used by the decoder side to the second candidate list, the decoder side adds a default filter flag to the second candidate list. A specific value of the default filter flag is not limited in the embodiments of the present disclosure, and is determined based on the actual conditions.

The decoder side determines the second candidate list based on the above steps, and then continues to perform the above S101-B22 to select a candidate filter flag from the second candidate list, and determine it as the filter flag of the current chroma block.

The specific manner of the decoder side selecting the filter flag of the current chroma block from the second candidate list is not limited in the embodiments of the present disclosure.

In a possible implementation, both the encoder side and the decoder side give tacit consent to determine a certain candidate filter flag among the plurality of candidate filter flag sets included in the second candidate list as the filter flag of the current chroma block. For example, a first candidate filter flag or a second candidate filter flag included in the second candidate list is determined as the filter flag of the current chroma block by default.

In a possible implementation, after selecting the filter flag of the current chroma block from the second candidate list, the encoder side writes a filter flag index of the current chroma block in the second candidate list into the bitstream. As such, the decoder side obtains the filter flag index by decoding the bitstream; and then selects the filter flag of the current chroma block from the above-mentioned constructed second candidate list based on the filter flag index.

The processes of the decoder side determining the cross-component prediction model parameter and the filter flag of the current chroma block in case 2 are introduced above.

After determining the cross-component prediction model parameter and the filter flag of the current chroma block based on the methods shown in case 1 and case 2 above, the decoder side performs the following S102.

In S102, cross-component prediction is performed on the current chroma block based on the cross-component prediction model parameter, to obtain a first prediction value of the current chroma block.

In the embodiments of the present disclosure, for ease of description, a prediction value for the current chroma block obtained based on the cross-component intra prediction mode is recorded as the first prediction value of the current chroma block.

In the embodiments of the present disclosure, when different cross-component prediction modes and cross-component prediction model parameters are adopted for the current chroma block, the specific manners of determining the first prediction value of the current chroma block are also different.

In some embodiments, if the cross-component intra prediction mode adopted for the current chroma block is the CCLM mode, the cross-component prediction model parameter determined above is a model parameter corresponding to the CCLM mode. In this case, the decoder side puts the cross-component prediction model parameter determined above into the above Formula (1) for calculation, to determine the first preset value of the current chroma block.

In some embodiments, if the cross-component intra prediction mode adopted for the current chroma block is the CCCM mode, the cross-component prediction model parameter determined above is a model corresponding to the CCCM mode. In this case, the decoder side puts the cross-component prediction model parameter determined above into the above Formula (3) or Formula (4), to determine the first preset value of the current chroma block.

In some embodiments, the decoder side respectively determines first prediction values for two chroma components of the current chroma block. That is, for an i-th chroma component of the current chroma block, the decoder side determines a first prediction value of the current chroma block under the i-th chroma component based on the cross-component prediction model parameter determined above. For example, the decoder side determines a first prediction value of the current chroma block under a first chroma component (Cb component or U component) based on the cross-component prediction model parameter determined above, and the decoder side determines a first prediction value of the current chroma block under a second chroma component (Cr component or V component) based on the cross-component prediction model parameter determined above.

After determining the first prediction value of the current chroma block based on the above S102, the decoder side performs the following S103.

In S103, a second prediction value of the current chroma block is determined based on the first prediction value and the filter flag of the current chroma block.

After determining the first prediction value and the filter flag of the current chroma block based on the above steps, the decoder side then determines whether to perform filtering on the first prediction value based on the filter flag of the current chroma block to obtain the second prediction value of the current obtained block.

In an example, when the filter flag of the current chroma block determined above indicates to perform filtering on the first prediction value of the current chroma block, the decoder side performs filtering on the first prediction value using a filter to obtain a filtered prediction value. For ease of description, the filtered prediction value is recorded as a third prediction value of the current block. For example, the filter illustrated in 7C is used to filter the first prediction value of the current block.

In an example, if the filter flag of the current chroma block indicates to skip filtering the first prediction value, the first prediction value is determined as the third prediction value of the current block.

Finally, the second prediction value of the current chroma block is obtained based on the third prediction value of the current chroma block.

In an example, if the prediction mode for the current chroma block is the cross-component prediction merge mode, the third prediction value of the current chroma block is directly determined as the second prediction value of the current chroma block.

In an example, if the prediction mode for the current chroma block is the chroma fusion derivation mode, the decoder side determines a fourth prediction value of the current chroma block based on a non-cross component prediction mode, and then obtains the second prediction value of the current chroma block based on the third prediction value and the fourth prediction value of the current chroma block.

In the video decoding method provided in the embodiments of the present disclosure, upon performing prediction on the current chroma block using the cross-component prediction mode, the decoder side determines the cross-component prediction model parameter and the filter flag of the current chroma block; where the filter flag of the current chroma block is determined based on the filter flag of the decoded picture block around the current chroma block, and is used to indicate whether to perform filtering on the prediction value obtained based on the cross-component prediction mode; then, based on the cross-component prediction model parameter, the cross-component prediction is performed on the current chroma block to obtain the first prediction value of the current chroma block; and then, based on the filter flag and the first prediction value of the current chroma block, the second prediction value of the current chroma block is determined. That is, prediction is performed on the first prediction value obtained from any cross-component prediction mode in the embodiments of the present disclosure, thereby improving the prediction effect of cross-component prediction and enhancing the encoding and decoding performance. In addition, in the embodiments of the present disclosure, the filter flag of the current chroma block is obtained by inheriting the filter flag of the encoded or decoded block, without introducing additional bit consumption to indicate the filter flag, thereby saving codewords and improving encoding efficiency.

The prediction method provided in the present disclosure is introduced above by taking the decoder side as an example, a description is made below by taking the encoder side as an example.

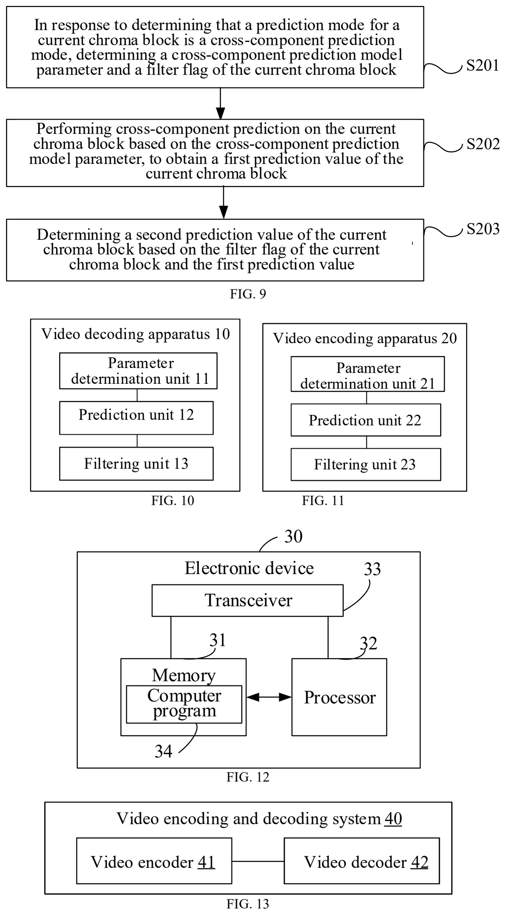

FIG. 9 is a flowchart of a prediction method provided in an embodiment of the present disclosure, and the embodiment of the present disclosure is applied to the video encoder illustrated in FIG. 1 and the video encoder illustrated in FIG. 2. As shown in FIG. 9, the method of the embodiment of the present disclosure includes S201-S203.

In S201, in response to determining that a prediction mode for a current chroma block is a cross-component prediction mode, a cross-component prediction model parameter and a filter flag of the current chroma block are determined.

In the embodiments of the present disclosure, upon performing encoding on the current block, the encoder side first performs prediction encoding on a luma component of the current block, to obtain a reconstructed luma value of the current block. Next, prediction encoding on a chroma component of the current block is performed.

In the embodiments of the present disclosure, the chroma component of the current block is referred to as the current chroma block.

Before performing the prediction encoding on the current chroma block, the prediction mode for the current chroma block is first determined.

The specific manner of determining the prediction mode for the current chroma block is not limited in the embodiments of the present disclosure.

In an example, a default prediction mode is determined as the prediction mode for the current chroma block. That is, in the embodiments of the present disclosure, both the encoder side and the decoder side perform prediction on the current chroma block using the default prediction mode. For example, both the encoder side and the decoder side give tacit consent to the prediction mode for the current chroma block being the cross-component prediction mode.

In an example, the encoder side determines a prediction mode with a lowest cost from multiple candidate prediction modes as the prediction mode for the current chroma block.

It can be seen from the above that the cross-component prediction mode includes modes such as a CCLM mode, a CCCM mode, a GLM mode, a CCMerge mode, a chroma fusion derivation mode, etc.

If the cross-component prediction mode adopted by the encoder side is the CCMerge mode or the chroma fusion derivation mode, the encoder side further needs to construct a list to determine the prediction mode for the current chroma block. For example, if the prediction mode for the current chroma block is the CCMerge mode, the encoder side further needs to construct a cross-component prediction mode list, and determine a specific cross-component prediction mode for the current chroma block from the list. Therefore, in the embodiments of the present disclosure, the encoder side first determines the first prediction mode, and then determines the prediction mode for the current chroma block based on the first prediction mode.

If the first prediction mode is determined to be the CCMerge mode or the chroma fusion derivation mode, a candidate list is constructed, and the specific cross-component prediction mode for the current chroma block is selected from the candidate list. The specific process may refer to the description of the above embodiments.

In some embodiments, the encoder side writes the determined prediction mode for the current chroma block into a bitstream, so that the decoder side may determine the prediction mode for the current chroma block by decoding the bitstream. For example, the encoder side writes an index of the prediction mode for the current chroma block into the bitstream. For another example, the encoder side writes an enable flag of the prediction mode for the current chroma block into the bitstream. For example, in a case where the prediction mode for the current chroma block is the CCCM mode, the enable flag of the CCCM mode is set to 1, and then written into the bitstream. Alternatively, in a case where the prediction mode for the current chroma block is the CCMerg, the enable flag of the CCMerg is set to 1, and then written into the bitstream.

In the embodiments of the present disclosure, in response to determining that the current chroma block performs prediction on the current chroma block using the cross-component prediction mode, the cross-component prediction model parameter and the filter flag of the current chroma block are determined.

Here, the cross-component prediction model parameter is model parameter(s) used for predicting the current chroma block using the cross-component prediction mode. For example, model parameters may be "a" and "b" in the above Formula (1).

Here, the filter flag is used to indicate whether to perform filtering on a prediction value obtained based on the cross-component prediction mode. For example, if the filter flag is set to true, that is, the value of the filter flag is 1, it indicates to perform filtering on the prediction value obtained based on the cross-component prediction mode. For another example, if the filter flag is set to false, that is, the value of the filter flag is 0, it indicates to skip filtering on the prediction value obtained based on the cross-component prediction mode.

In the embodiments of the present disclosure, the filter flag of the current chroma block is determined based on a filter flag of an encoded picture block around the current chroma block. That is, in the embodiments of the present disclosure, the filter flag of the current chroma block is inherited from the filter flag of the encoded and decoded block, and the encoder side does not need to introduce additional bit consumption to indicate the filter flag, thereby saving codewords and improving the encoding efficiency.

The process of the encoder side determining the cross-component prediction model parameter and the filter flag of the current chroma block is introduced below.

It can be seen from the above that the cross-component prediction mode includes modes such as the CCLM mode, the CCCM mode, the GLM mode, the CCMerge mode, the chroma fusion derivation mode, etc.

In some embodiments, if the cross-component prediction mode for the current chroma block is a mode such as the CCLM mode, the CCCM mode, or the GLM mode, etc., the encoder side may determine the cross-component prediction model parameter of the current chroma block through calculation, and the calculation process refers to the above description, which will not be repeated herein. As for the filter flag of the current chroma block, it is determined by the encoder side based on the filter flag of the encoded picture block around the current chroma block. That is, the encoder side inherits the filter flag of the encoded picture block as the filter flag of the current chroma block.

In some embodiments, if the cross-component prediction mode for the current chroma block is the CCMerge or a derivation mode such as the chroma fusion derivation mode, etc., the encoder side may derive the cross-component prediction model parameter of the current chroma block based on the cross-component prediction model parameter of the encoded picture block around the current chroma block, and derive a filter coefficient of the current chroma block based on a filter coefficient of the encoded picture block around the current chroma block.

It can be seen from the above that, in some cases, the filter coefficient and the cross-component prediction model parameter of the current chroma block may be determined by the encoder side in two separate steps, and may be determined separately. In some cases, the encoder side may simultaneously determine the filter coefficient and the cross-component prediction model parameter of the current chroma block. For example, if the cross-component prediction mode for the current chroma block is the CCMerge or a derivation mode such as the chroma fusion derivation mode, etc., the encoder side may synchronously derive the filter coefficient and cross-component prediction model parameter of the current chroma block.

It can be seen from the above description that in the embodiments of the present disclosure, in a certain case, the process of determining the cross-component prediction model parameter of the current chroma block and the process of determining the filter flag of the current chroma block may be the same process. That is, the cross-component prediction model parameter and the filter flag of the current chroma block are determined together. In another case, the process of determining the cross-component prediction model parameter of the current chroma block and the process of determining the filter flag of the current chroma block are two independent processes. That is, the cross-component prediction model parameter and the filter flag of the current chroma block are determined separately. The two cases are introduced below respectively.

Case 1: the cross-component prediction model parameter and filter flag of the above-mentioned current chroma block are determined together, that is, in the embodiments of the present disclosure, the cross-component prediction model parameter and the filter flag are bound together. In a case where the cross-component prediction model parameter of the current chroma block is determined, a filter flag to which the cross-component prediction model parameter of the current chroma block is bound is determined as the filter flag of the current chroma block. Alternatively, it can be understood that, in this embodiment, the current chroma block may inherit not only the cross-component prediction model parameter of another encoded picture block, but also the filter flag of the encoded picture block. For example, the current chroma block inherits a cross-component prediction model parameter of an encoded picture block 1 around the current chroma block, and also inherits a filter flag of the picture block 1. As such, the encoder side determines the filter flag of the current chroma block while determining the cross-component prediction model parameter of the current chroma block, thereby saving the calculation amount of the encoder side and improving the encoding efficiency.

Based on this, determining the cross-component prediction model parameter and filter flag of the current chroma block in the above S201 includes the following S201-A.

In S201-A, the cross-component prediction model parameter and the filter flag of the current chroma block are determined based on cross-component prediction information of the encoded picture block around the current chroma block.

Here, the cross-component prediction information includes the cross-component prediction model parameter and the filter flag of the encoded picture block.

In case 1, the cross-component prediction information of the encoded picture block around the current chroma block includes the cross-component prediction model parameter used for the encoded picture block during cross-component prediction, and the filter flag of the encoded picture block, where the filter flag of the encoded picture block is used to indicate whether to perform filtering on a prediction value obtained from the cross-component prediction for the encoded picture block.

In an example, the cross-component prediction information of the encoded picture block around the current chroma block is shown in Table 7.

It can be seen from the above Table 7 that cross-component prediction information of each encoded picture block includes a cross-component prediction model parameter used for the corresponding encoded picture block and a filter flag of the corresponding encoded picture block. As such, the encoder side may determine the cross-component prediction model parameter and the filter flag of the current chroma block based on the cross-component prediction information of the encoded picture block around the current chroma block. For example, the cross-component prediction model parameter of one encoded picture block among encoded picture blocks around the current chroma block may be determined as the cross-component prediction model parameter of the current chroma block, and a filter flag of this encoded picture block may be determined as the filter flag of the current chroma block.

In the embodiments of the present disclosure, the specific manner of the encoder side determining the cross-component prediction model parameter and filter flag of the current chroma block based on the cross-component prediction information of the encoded picture block around the current chroma block includes but not limited to the following manner 1 to manner 3.

Manner 1: the encoder side gives tacit consent to determine a cross-component prediction model parameter of a certain encoded picture block (e.g., a first encoded picture block) around the current chroma block as the cross-component prediction model parameter of the current chroma block, and determine a filter flag of the first encoded picture block as the filter flag of the current chroma block. A specific type of the first encoded picture block is not limited in the embodiments of the present disclosure. For example, the first encoded picture block is a left neighboring encoded picture block, or a top-left neighboring encoded picture block, or a top neighboring encoded picture block of the current chroma block.

Manner 2: the encoder side gives tacit consent to determine a cross-component prediction model parameter of a certain encoded picture block (e.g., the first encoded picture block) around the current chroma block as the cross-component prediction model parameter of the current chroma block, and the encoder side gives tacit consent to determine a filter flag of another encoded picture block (e.g., a second encoded picture block) around the current chroma block as the filter flag of the current color block. Specific types of the first encoded picture block and the second encoded picture block are not limited in the embodiments of the present disclosure. For example, the first encoded picture block or the second encoded picture block is a left neighboring encoded picture block, or a top-left neighboring encoded picture block, or a top neighboring encoded picture block of the current chroma block, and the first encoded picture block is different from the second encoded picture block. For example, the first encoded picture block is the left neighboring encoded picture block of the current chroma block, the second encoded picture block is the top neighboring encoded picture block of the current chroma block, or the like.

Manner 3: the encoder side determines the cross-component prediction model parameter and the filter flag of the current chroma block through the following S201-A1 to S201-A3.

In S201-A1, a first candidate list is constructed based on the cross-component prediction information of the encoded picture block around the current chroma block, where the first candidate list includes a plurality of candidate cross-component prediction information sets, and each cross-component prediction information set includes a candidate cross-component prediction model parameter set and a candidate filter flag.

In S201-A2, first cross-component prediction information is selected from the plurality of candidate cross-component prediction information sets included in the first candidate list.

In S201-A3, the cross-component prediction model parameter and the filter flag of the current chroma block are determined based on the first cross-component prediction information.

In the implementation, since the cross-component prediction information of the encoded picture block includes the cross-component prediction model parameter and the filter flag of the encoded picture block, the encoder side constructs the first candidate list based on the cross-component prediction information of the encoded picture block around the current chroma block; where the first candidate list includes the plurality of candidate cross-component prediction information sets, where each cross-component prediction information set includes a candidate cross-component prediction model parameter set and a candidate filter flag. Next, the encoder side selects a candidate cross-component prediction information set (which is recorded as the first cross-component prediction information) from the plurality of candidate cross-component prediction information sets included in the constructed first candidate list. As such, the encoder side may determine the cross-component prediction model parameter and the filter flag of the current chroma block based on the selected first cross-component prediction information. Furthermore, the cross-component prediction model parameter and the filter flag of the current chroma block are determined simultaneously, thereby improving the pace of determining the cross-component prediction model parameter and the filter flag of the current chroma block, and improving the encoding efficiency while improving the prediction effect.

In some embodiments, in order to facilitate the management of the cross-component prediction information, in the embodiments of the present disclosure, the cross-component prediction information of the encoded picture block is stored in a same storage space (e.g., a first storage space curCand) of the encoded picture block. That is, the cross-component prediction model parameter and the filter flag of the same encoded picture block are stored in the same storage space of the encoded picture block.

Exemplarily, the cross-component prediction information of the encoded picture block is stored as shown in Table 8.

In some embodiments, the cross-component prediction information of the above-mentioned encoded picture block includes not only the cross-component prediction model parameter and the filter flag, but also cross-component prediction mode information of the encoded picture block. Exemplarily, the cross-component prediction mode information of the encoded picture block is also stored in the first storage space of the encoded picture block, and in this case, the cross-component prediction information of the above-mentioned encoded picture block is stored as shown in Table 9.

In the embodiments of the present disclosure, in a case where the cross-component prediction information (e.g., the cross-component prediction model parameter and the filter flags) of the encoded picture block is stored in the first storage space curCand of the encoded picture block, when the encoder side performs the above S201-AI, cross-component prediction information of respective encoded picture blocks is obtained from first storage spaces of the respective encoded picture blocks of the current chroma block, to achieve rapid acquisition for the cross-component prediction information of the encoded picture blocks, so as to construct the first candidate list based on the quickly acquired cross-component prediction information of the encoded picture blocks, thereby improving the construction pace for the first candidate list.

The process of constructing the first candidate list based on the cross-component prediction information of the encoded picture blocks around the current chroma block is introduced below.

The specific type of the encoded picture block around the current chroma block is not limited in the embodiments of the present disclosure.

In some embodiments, the encoded picture block around the current chroma block includes at least one of: an encoded picture on the top of (above) the current chroma block, an encoded picture on the left of the current chroma block, an encoded picture on the top left of the current chroma block, an encoded picture on the bottom left of the current chroma block, or an encoded picture on the top right of the current chroma block.

For example, the encoded picture block around the current chroma block merely includes the encoded picture block on the top of the current chroma block.

For another example, the encoded picture block around the current chroma block merely includes the encoded picture block on the left of the current chroma block.

For yet another example, the encoded picture block around the current chroma block merely includes the encoded picture blocks on the left and bottom left of the current chroma block.

For yet another example, the encoded picture block around the current chroma block merely includes the encoded picture blocks on the left and top left of the current chroma block.

For yet another example, the encoded picture block around the current chroma block merely includes the encoded picture blocks on the left, bottom left, and top left of the current chroma block.

For yet another example, the encoded picture block around the current chroma block merely includes the encoded picture blocks on the top and top left of the current chroma block.

For yet another example, the encoded picture block around the current chroma block merely includes the encoded picture blocks on the top and top left of the current chroma block.

For yet another example, the encoded picture block around the current chroma block merely includes the encoded picture blocks on the top, top left, and top right of the current chroma block.

As such, the encoder side adds cross-component prediction information of the above-mentioned at least one encoded picture block to the first candidate list.

In some embodiments, the above S201-A1 includes the following steps.

In S201-A11, cross-component prediction information of a neighboring block of the current chroma block in spatial domain is added to the first candidate list according to a first preset order.

In the embodiment, the encoded picture block around the current chroma block includes a neighboring block of the current chroma block in spatial domain. Exemplarily, the neighboring block of the current chroma block in spatial domain are illustrated in FIG. 7A, which includes encoded picture blocks at five positions including A0, A1, B0, B1, and B2 around the current chroma block. It should be noted that, in some embodiments, the neighboring blocks of the current chroma block in spatial domain may also include more neighboring blocks in spatial domain than those illustrated in FIG. 7A, or fewer neighboring blocks in spatial domain than those illustrated in FIG. 7A, or neighboring blocks in spatial domain whose positions are not exactly the same as those of the neighboring blocks in spatial domain illustrated in FIG. 7A, which are not limited in the embodiments of the present disclosure. For ease of description, the neighboring blocks in spatial domain illustrated in FIG. 7A are taken as an example for illustration.

In the embodiment, the encoder side adds pieces of cross-component prediction information of the neighboring blocks of the current chroma block in spatial domain to the first candidate list one by one according to the first preset order, until the length of the first candidate list reaches a preset length. Here, the length of the first candidate list may be understood as a number of pieces of cross-component prediction information included in the first candidate list. When the number of pieces of cross-component prediction information included in the first candidate list reaches a first preset number, no more cross-component prediction information will be added to the first candidate list.

The first preset order is not limited in the embodiments of the present disclosure.

In an example, if the neighboring blocks of the current chroma block in spatial domain are as illustrated in FIG. 7A, the above-mentioned first preset order may be B1→A1→B0→A0→B2. That is, the encoder side sequentially accesses the neighboring blocks in spatial domain at positions B1→ A1→ B0→A0→ B2. In a case where a cross-component intra prediction mode is adopted for the neighboring blocks in spatial domain at these positions, the pieces of cross-component prediction information of these neighboring blocks in spatial domain are sequentially stored in the first candidate list. Exemplarily, the order for storing the pieces of cross-component prediction information in the first candidate list may be consistent with the order for accessing the above-mentioned positions.

In some embodiments, the encoded picture block around the current chroma block further includes non-neighboring blocks of the current chroma block in spatial domain. In a case where the number of pieces of cross-component prediction information included in the first candidate list is less than the first preset number (that is, the length of the first candidate list is shorter than the preset length) when the encoder side adds the cross-component prediction information of the neighboring blocks of the current chroma block in spatial domain to the first candidate list based on the above steps, the encoder side adds cross-component prediction information of a non-neighboring block of the current chroma block in spatial domain to the first candidate list according to a second preset order. The non-neighboring block of the current chroma block in spatial domain includes encoded picture blocks at some non-neighboring positions for the current chroma block that are on the top, top left, top right, left, or bottom left of the current chroma block.

Exemplarily, the non-neighboring blocks of the current chroma block in spatial domain are illustrated in FIG. 7B, and include encoded picture blocks at 60 positions around the current chroma block. It should be noted that, in some embodiments, the non-neighboring blocks of the current chroma block in spatial domain may also include more non-neighboring blocks in spatial domain than those illustrated in FIG. 7B, or fewer non-neighboring blocks in spatial domain than those illustrated in FIG. 7B, or non-neighboring blocks whose positions are not exactly the same as those of the non-neighboring blocks in spatial domain illustrated in FIG. 7B, which are not limited in the embodiments of the present disclosure. For ease of description, the non-neighboring blocks in spatial domain illustrated in FIG. 7B are taken as an example for illustration.

In the embodiment, in a case where the number of pieces of cross-component prediction information included in the first candidate list is less than the first preset number after the encoder side adds the pieces of cross-component prediction information of the neighboring blocks of the current chroma block in spatial domain to the first candidate list based on the above steps, the encoder side adds the pieces of cross-component prediction information of the non-neighboring blocks of the current chroma block in spatial domain to the first candidate list one by one according to the second preset order, until the number of pieces of cross-component prediction information included in the first candidate list is equal to the first preset number.

In some embodiments, in a case where the number of pieces of cross-component prediction information included in the first candidate list is still less than the first preset number after the encoder side adds the cross-component prediction information of the neighboring blocks and the non-neighboring blocks of the current chroma block in spatial domain to the first candidate list, the encoder side adds cross-component prediction model parameter most recently used by the encoder side to the first candidate list, until the number of pieces of cross-component prediction information included in the first candidate list is equal to the first preset number.

In the embodiments of the present disclosure, the encoder side maintains a historical information-based table, where the table includes the cross-component prediction information most recently used by the encoder side. As such, in a case where the number of pieces of cross-component prediction information included in the first candidate list is still less than the first preset number after the encoder side adds the cross-component prediction information of the neighboring blocks and the non-neighboring blocks of the current chroma block in spatial domain to the first candidate list, one or more pieces of cross-component prediction information most recently used by the encoder side are selected from the historical information-based table and added to the first candidate list by the encoder side.

In some embodiments, in a case where the number of pieces of cross-component prediction information included in the first candidate list is still less than the first preset number after the encoder side adds the cross-component prediction information most recently used by the encoder side to the first candidate list, the embodiments of the present disclosure further include the following steps.

In step 1, the encoder side acquires at least one default cross-component prediction model parameter set.

In step 2, for an i-th cross-component prediction model parameter set in the at least one cross-component prediction model parameter set, a filter flag corresponding to the i-th cross-component prediction model parameter set is determined, and the i-th cross-component prediction model parameter set and the filter flag corresponding to the i-th cross-component prediction model parameter set are combined to form an i-th cross-component prediction information set, i is a positive integer.

In the embodiments of the present disclosure, some default cross-component prediction model parameters (e.g., a default CCLM cross-component prediction model parameter) are further included.

Since the default cross-component prediction model parameter merely includes cross-component prediction model parameters, but does not include a filter flag, the encoder side needs to determine a filter flag corresponding to each cross-component prediction model parameter set in the at least one cross-component prediction model parameter set. Here, processes of determining filter flags corresponding to respective cross-component prediction model parameter sets in the at least one cross-component prediction model parameter set are consistent. For ease of description, the process of determining the filter flag corresponding to the i-th cross-component prediction model parameter set is taken as an example for illustration.

The specific manner for the encoder side to determine the filter flag corresponding to the i-th cross-component prediction model parameter set is not limited in the embodiments of the present disclosure.

In an example, the encoder side determines a default value to be a value of the filter flag corresponding to the i-th cross-component prediction model parameter set. The default value may be a first value or a second value.

For example, the encoder side determines that the value of the filter flag corresponding to the i-th cross-component prediction model parameter set is the first value (e.g., 1), which is used to indicate to perform filtering on the prediction value obtained from the cross-component prediction mode.

For another example, the encoder side determines that the value of the filter flag corresponding to the i-th cross-component prediction model parameter set is the second value (e.g., 0), which is used to indicate to skip filtering on the prediction value obtained from the cross-component prediction mode.

Based on the above steps, the encoder side may determine a filter flag corresponding to each cross-component prediction model parameter set in the at least one cross-component prediction model parameter set. Next, each cross-component prediction model parameter set in the at least one cross-component prediction model parameter set and the filter flag corresponding to the cross-component prediction model parameter set are determined as a cross-component prediction information set, so that at least one cross-component prediction information set is obtained.

In step 4, the at least one determined cross-component prediction information set is added to the first candidate list.

The encoder side determines the first candidate list based on the above steps, and continues to perform the above S201-A2 to select the first cross-component prediction information from the plurality of candidate cross-component prediction information sets included in the first candidate list.

The specific manner for the encoder side to select the first cross-component prediction information from the plurality of candidate cross-component prediction information sets included in the first candidate list is not limited in the embodiments of the present disclosure.

In a possible implementation, both the encoder side and the decoder side give tacit consent to determine a certain candidate cross-component prediction information set among the plurality of candidate cross-component prediction information sets included in the first candidate list as the first cross-component prediction information. For example, a first candidate cross-component prediction information set or a second candidate cross-component prediction information set included in the first candidate list is determined as the first cross-component prediction information by default.

In a possible implementation, the encoder side determines a respective first cost upon performing cross-component prediction on the current chroma block based on each of the plurality of candidate cross-component prediction information sets included in the first candidate list, respectively; and selects the first cross-component prediction information from the plurality of candidate cross-component prediction information sets included in the first candidate list based on the first cost.

Specifically, for each piece of candidate cross-component prediction information among the plurality of candidate cross-component prediction information sets included in the first candidate list, the cross-component prediction is performed on the current chroma block by using cross-component prediction model parameter included in the corresponding piece of candidate cross-component prediction information, so as to obtain a prediction value 1 of the current chroma block. Next, a filter flag included in the corresponding piece of candidate cross-component prediction information is used to indicate whether to perform filtering on the prediction value 1; in a case where the filter flag included in the candidate cross-component prediction information indicates that the filtering is required to be performed, a prediction value 2 is obtained by performing filtering on the prediction value 1, and in a case where the filter flag included in the candidate cross-component prediction information indicates that the filtering is not required to be performed, a prediction value 2 is obtained without performing filtering on the prediction value 1. Based on the prediction value 2 and a true value of the current chroma block, a first cost corresponding to the candidate cross-component prediction information is determined. Referring to this method, a respective first cost corresponding to each candidate cross-component prediction information set among the plurality of candidate cross-component prediction information sets included in the first candidate list may be determined, so that the first cross-component prediction information may be selected from the plurality of candidate cross-component prediction information sets included in the first candidate list based on the first costs corresponding to plurality of candidate cross-component prediction information sets. For example, candidate cross-component prediction information with a smallest first cost among the plurality of candidate cross-component prediction information sets included in the first candidate list is determined as the first cross-component prediction information.

In some embodiments, after selecting the first cross-component prediction information from the first candidate list, the encoder side writes an index of the first cross-component prediction information in the first candidate list into the

**EP 4 742 673 A1**

bitstream. As such, the decoder side obtains the index of the first cross-component prediction information by decoding the bitstream; and then selects the first cross-component prediction information from the above-mentioned constructed first candidate list based on the index of the first cross-component prediction information.

After selecting the first cross-component prediction information from the plurality of candidate cross-component prediction information sets included in the first candidate list based on the above steps, the encoder side performs the above S201-A3.

It can be seen from the above that the first cross-component prediction information in the embodiments of the present disclosure includes a cross-component prediction model parameter set and a filter flag. Based on this, the above S201-A3 includes at least the following implementation manners.

Manner 1: the encoder side directly determines the cross-component prediction model parameter included in the first cross-component prediction information as the cross-component prediction model parameter of the current chroma block, and determines the filter flag included in the first cross-component prediction information as the filter flag of the current chroma block.

Manner 2: the encoder side performs modification on the cross-component prediction model parameter included in the first cross-component prediction information, and determines the modified cross-component prediction model parameter as the cross-component prediction model parameter of the current chroma block. At the same time, the filter flag included in the first cross-component prediction information is determined as the filter flag of the current chroma block.

In some embodiments, in a case where a cross-component prediction model parameter and a filter flag of a same picture block are stored in a first storage space of the picture block, then, after determining the cross-component prediction model parameter and the filter flag of the current chroma block based on the above steps, the encoder side stores the cross-component prediction model parameter and the filter flag of the current chroma block in the first storage space of the current chroma block, so as to facilitate the subsequent determination for cross-component prediction model parameters and filter flags of other chroma blocks.

The specific representation for the filter flag of the current chroma block is not limited in the embodiments of the present disclosure.

In an example, a field, i.e., curCand.ccInsideFilter is used to represent the filter flag.

The process of the encoder side synchronously determining the cross-component prediction model parameter and the filter flag of the current chroma block in case 1 is introduced above.

In case 2, the encoder side determines the cross-component prediction model parameter and the filter flag of the current chroma block separately, and in this case, the above S201 includes the following S201-B1 and S201-B2.

In S201-B1, the cross-component prediction model parameter of the current chroma block is determined.

In S201-B2, the filter flag of the current chroma block is determined based on a filter flag of an encoded picture block around the current chroma block.

In the case 2, the encoder side determines the cross-component prediction model parameter of the current chroma block and determines the filter flag of the current chroma block in two steps. Here, the encoder side may first determine the cross-component prediction model parameter of the current chroma block, and then determine the filter flag of the current chroma block. Alternatively, the filter flag of the current chroma block may be determined first, and then the cross-component prediction model parameter of the current chroma block may be determined. Alternatively, the encoder side determines the cross-component prediction model parameter and the filter flag of the current chroma block in parallel, which is not limited in the embodiments of the present disclosure.

Herein, the manner of determining the cross-component prediction model parameter of the current chroma block in above-mentioned S201-B1 includes, but not limited to the following.

Manner 1: the encoder side performs calculation based on an encoded reference pixel around the current chroma block and a corresponding luma component to obtain the cross-component prediction model parameter of the current chroma block. The specific calculation process may refer to the description of the above related embodiments.

Manner 2: the encoder side inherits a cross-component prediction model parameter of an encoded picture block as the cross-component prediction model parameter of the current chroma block.

Specifically, the encoder side constructs a cross-component prediction model parameter candidate list in the same manner as constructing the first candidate list described above. For example, the encoder side sequentially adds, according to a preset order, a cross-component prediction model parameter of a neighboring block of the current chroma block in spatial domain, a cross-component prediction model parameter of a non-neighboring block of the current chroma block in spatial domain, a most recently used cross-component prediction model parameter, and a default cross-component prediction model parameter to the cross-component prediction model parameter candidate list, until a length of the cross-component prediction model parameter candidate list reaches a preset length. Next, a certain cross-component prediction model parameter is selected from the cross-component prediction model parameter candidate list, and is determined as the cross-component prediction model parameter of the current chroma block. For example, a cross-component prediction model parameter with a smallest cost in the cross-component prediction model parameter candidate list is determined as the cross-component prediction model parameter of the current chroma block.

34

In some embodiments, the encoder side writes an index of the cross-component prediction model parameter of the current chroma block in the cross-component prediction model parameter candidate list into the bitstream.

The process of the encoder side determining the filter flag of the current chroma block is introduced below.

The manner of determining the filter flag of the current chroma block based on the filter flag of the encoded picture block around the current chroma block in the above S201-B2 includes, but not limited to the following.

Manner 1: the encoder side gives tacit consent to determine a filter flag of a certain encoded picture block around the current chroma block as the filter flag of the current chroma block. For example, the encoder side gives tacit consent to determine a filter flag of an encoded picture block on the top of the current chroma block as the filter flag of the current chroma block. For another example, the encoder side gives tacit consent to determine a filter flag of an encoded picture block on the left of the current chroma block as the filter flag of the current chroma block. For yet another example, the encoder side gives tacit consent to determine a filter flag of an encoded picture block on the top-left corner of the current chroma block as the filter flag of the current chroma block. For yet another example, the encoder side gives tacit consent to determine a filter flag of an encoded picture block on the top-right corner of the current chroma block as the filter flag of the current chroma block.

In manner 2, the above S201-B2 includes the following steps S201-B21 and S201-B22.

In S201-B21, a second candidate list is constructed based on the filter flag of the encoded picture block around the current chroma block, where the second candidate list includes a plurality of candidate filter flags.

In S201-B22, a certain candidate filter flag is selected from the second candidate list, and is determined as the filter flag of the current chroma block.

In manner 2, the encoder side may construct the second candidate list based on the filter flag of the encoded picture block around the current chroma block (the second candidate list may be understood as a filter flag candidate list), and then the encoder side selects the filter flag of the current chroma block from candidate filter flags included in the second candidate list.

The process of the encoder side constructing the second candidate list based on the filter flag of the encoded picture block around the current chroma block is introduced below.

The specific type of the encoded picture block around the current chroma block is not limited in the embodiments of the present disclosure.

In some embodiments, the encoded picture block around the current chroma block includes at least one of: an encoded picture on the top of the current chroma block, an encoded picture on the left of the current chroma block, an encoded picture on the top left of the current chroma block, an encoded picture on the bottom left of the current chroma block, or an encoded picture on the top right of the current chroma block. As such, the encoder side adds at least one filter flag of the at least one of the encoded picture block to the second candidate list.

In some embodiments, the above S201-B21 includes the following steps.

In S201-B211, a filter flag of a neighboring block of the current chroma block in spatial domain is added to the second candidate list according to a third preset order.

In the embodiment, the encoded picture block around the current chroma block includes a neighboring block of the current chroma block in spatial domain. Exemplarily, the neighboring block of the current chroma block in spatial domain are illustrated in FIG. 7A, which includes encoded picture blocks at five positions including A0, A1, B0, B1, and B2 around the current chroma block. It should be noted that, in some embodiments, the neighboring blocks of the current chroma block in spatial domain may also include more neighboring blocks in spatial domain than those illustrated in FIG. 7A, or fewer neighboring blocks in spatial domain than those illustrated in FIG. 7A, or neighboring blocks in spatial domain whose positions are not exactly the same as those of the neighboring blocks in spatial domain illustrated in FIG. 7A, which are not limited in the embodiments of the present disclosure. For ease of description, the neighboring blocks in spatial domain illustrated in FIG. 7A are taken as an example for illustration.

In the embodiment, the encoder side adds the filter flag of the neighboring blocks of the current chroma block in spatial domain to the second candidate list one by one according to the third preset order, until the length of the second candidate list reaches a preset length. That is, when the number of filter flags included in the second candidate list reaches a second preset number, no more filter flag will be added to the second candidate list.

The second preset order is not limited in the embodiments of the present disclosure.

In an example, if the neighboring blocks of the current chroma block in spatial domain are as illustrated in FIG. 7A, the above-mentioned second preset order may be B1->A1->B0->A0->B2. That is, the encoder side sequentially accesses the neighboring blocks in spatial domain at positions B1->A1->B0->A0->B2. If a cross-component intra prediction mode is adopted for the neighboring blocks in spatial domain at these positions, filter flags of these neighboring blocks in spatial domain are sequentially stored in the second candidate list. Exemplarily, the order for storing the filter flags in the second candidate list may be consistent with the order for accessing the above-mentioned positions.

In some embodiments, the encoded picture block around the current chroma block further includes non-neighboring blocks of the current chroma block in spatial domain. In a case where the number of filter flags included in the second candidate list is less than the second preset number (that is, the length of the second candidate list is shorter than the preset length) when the encoder side adds the filter flags of the neighboring blocks of the current chroma block in spatial domain to the second candidate list based on the above steps, the encoder side adds a filter flag of a non-neighboring block of the current chroma block in spatial domain to the second candidate list according to a fourth preset order. The non-neighboring block of the current chroma block in spatial domain includes encoded picture blocks at some non-neighboring positions for the current chroma block that are on the top, top left, top right, left, or bottom left of the current chroma block.

Exemplarily, the non-neighboring blocks of the current chroma block in spatial domain are illustrated in FIG. 7B, and include encoded picture blocks at 60 positions around the current chroma block. It should be noted that, in some embodiments, the non-neighboring blocks of the current chroma block in spatial domain may also include more non-neighboring blocks in spatial domain than those illustrated in FIG. 7B, or fewer non-neighboring blocks in spatial domain than those illustrated in FIG. 7B, or non-neighboring blocks whose positions are not exactly the same as those of the non-neighboring blocks in spatial domain illustrated in FIG. 7B, which are not limited in the embodiments of the present disclosure. For ease of description, the non-neighboring blocks in spatial domain illustrated in FIG. 7B are taken as an example for illustration.

In the embodiment, in a case where the number of filter flags included in the second candidate list is less than the second preset number after the encoder side adds the filter flags of the neighboring blocks of the current chroma block in spatial domain to the second candidate list based on the above steps, the encoder side adds the filter flags of the non-neighboring blocks of the current chroma block in spatial domain to the second candidate list one by one according to the fourth preset order, until the number of filter flags included in the second candidate list is equal to the second preset number.

In some embodiments, in a case where the number of filter flags included in the second candidate list is still less than the second preset number after the encoder side adds the filter flags of the neighboring blocks and the non-neighboring blocks of the current chroma block in spatial domain to the second candidate list, the encoder side adds a filter flag most recently used by the encoder side to the second candidate list. That is, in the embodiments of the present disclosure, the encoder side may maintain a table for storing filter flags most recently used by the encoder side. As such, when constructing the second candidate list, a filter flag most recently used by the encoder side may be acquired from the table and added to the second candidate list.

In some embodiments, in a case where the number of filter flags included in the second candidate list is less than the second preset number after the encoder side adds the filter flag most recently used by the encoder side to the second candidate list, the encoder side adds a default filter flag to the second candidate list. A specific value of the default filter flag is not limited in the embodiments of the present disclosure, and is determined based on the actual conditions.

The encoder side determines the second candidate list based on the above steps, and then continues to perform the above S201-B22 to select a candidate filter flag from the second candidate list, and determine it as the filter flag of the current chroma block.

The specific manner of the encoder side selecting the filter flag of the current chroma block from the second candidate list is not limited in the embodiments of the present disclosure.

In a possible implementation, both the encoder side and the decoder side give tacit consent to determine a certain candidate filter flag among the plurality of candidate filter flag sets included in the second candidate list as the filter flag of the current chroma block. For example, a first candidate filter flag or a second candidate filter flag included in the second candidate list is determined as the filter flag of the current chroma block by default.

In a possible implementation, the encoder side determines a respective second cost upon performing filtering on the first prediction value of the current chroma block based on each of the plurality of candidate filter flags included in the second candidate list, and selects a candidate filter flag from the plurality of candidate filter flags included in the second candidate list based on the second flag, and determines the selected candidate filter flag as the filter flag of the current chroma block.

Specifically, a prediction value 1 of the current chroma block is first determined based on the cross-component prediction model parameter of the current chroma block. Next, for each candidate filter flag among the plurality of candidate filter flags included in the second candidate list, the corresponding candidate filter flag is used to indicate whether to perform filtering on the prediction value 1; in a case where the candidate filter flag indicates that filtering is required to be performed, a prediction value 2 is obtained by performing filtering on the prediction value 1, and in a case where the candidate filter flag indicates that the filtering is not required to be performed, the prediction value 2 is obtained without performing filtering on the prediction value 1. A second cost corresponding to the candidate filter flag is determined based on the prediction value 2 and a true value of the current chroma block. Referring to this method, a respective second cost corresponding to each candidate filter flag among the plurality of candidate filter flags included in the second candidate list may be determined, so that the candidate filter flag may be selected from the plurality of candidate filter flags included in the second candidate list based on the second costs corresponding to the plurality of candidate filter flags, and the selected one is determined as the filter flag of the current chroma block. For example, a candidate filter flag with a smallest second cost among the plurality of candidate filter flags included in the second candidate list is determined as the filter flag of the current chroma block.

In some embodiments, after selecting the filter flag of the current chroma block from the second candidate list, the encoder side writes a filter flag index of the current chroma block in the second candidate list into the bitstream. As such, the decoder side obtains the filter flag index by encoding the bitstream; and then selects the filter flag of the current chroma block from the above-mentioned constructed second candidate list based on the filter flag index.

The processes of the encoder side determining the cross-component prediction model parameter and the filter flag of the current chroma block in case 2 are introduced above.

After determining the cross-component prediction model parameter and the filter flag of the current chroma block based on the methods shown in case 1 and case 2 above, the encoder side performs the following S202.

In S202, cross-component prediction is performed on the current chroma block based on the cross-component prediction model parameter, to obtain the first prediction value of the current chroma block.

In the embodiments of the present disclosure, for ease of description, a prediction value for the current chroma block obtained based on the cross-component intra prediction mode is recorded as the first prediction value of the current chroma block.

In the embodiments of the present disclosure, when different cross-component prediction modes and cross-component prediction model parameters are adopted for the current chroma block, the specific manners of determining the first prediction value of the current chroma block are also different.

In some embodiments, if the cross-component intra prediction mode adopted for the current chroma block is the CCLM mode, the cross-component prediction model parameter determined above is a model parameter corresponding to the CCLM mode. In this case, the encoder side puts the cross-component prediction model parameter determined above into the above formula (1) for calculation, to determine the first preset value of the current chroma block.

In some embodiments, if the cross-component intra prediction mode adopted for the current chroma block is the CCCM mode, the cross-component prediction model parameter determined above is a model corresponding to the CCCM mode. In this case, the encoder side puts the cross-component prediction model parameter determined above into the above formula (3) or formula (4), to determine the first preset value of the current chroma block.

In some embodiments, the encoder side respectively determines first prediction values for two chroma components of the current chroma block. That is, for an i-th chroma component of the current chroma block, the encoder side determines a first prediction value of the current chroma block under the i-th chroma component based on the cross-component prediction model parameter determined above. For example, the encoder side determines a first prediction value of the current chroma block under a first chroma component (Cb component or U component) based on the cross-component prediction model parameter determined above, and the encoder side determines a first prediction value of the current chroma block under a second chroma component (Cr component or V component) based on the cross-component prediction model parameter determined above.

After determining the first prediction value of the current chroma block based on the above S202, the encoder side performs the following S203.

In S203, a second prediction value of the current chroma block is determined based on the first prediction value and the filter flag of the current chroma block.

After determining the first prediction value and the filter flag of the current chroma block based on the above steps, the encoder side then determines whether to perform filtering on the first prediction value based on the filter flag of the current chroma block to obtain the second prediction value of the current obtained block.

In an example, when the filter flag of the current chroma block determined above indicates to perform filtering on the first prediction value of the current chroma block, the encoder side performs filtering on the first prediction value using a filter to obtain a filtered prediction value. For ease of description, the filtered prediction value is recorded as a third prediction value of the current block. For example, the filter illustrated in 7C is used to filter the first prediction value of the current block.

In an example, if the filter flag of the current chroma block indicates to skip filtering the first prediction value, the first prediction value is determined as the third prediction value of the current block.

Finally, the second prediction value of the current chroma block is obtained based on the third prediction value of the current chroma block.

In an example, if the prediction mode for the current chroma block is the cross-component prediction merge mode, the third prediction value of the current chroma block is directly determined as the second prediction value of the current chroma block.

In an example, if the prediction mode for the current chroma block is the chroma fusion derivation mode, the encoder side determines a fourth prediction value of the current chroma block based on a non-cross component prediction mode, and then obtains the second prediction value of the current chroma block based on the third prediction value and the fourth prediction value of the current chroma block.

In the video encoding method provided in the embodiments of the present disclosure, upon performing prediction on the current chroma block using the cross-component prediction mode, the encoder side determines the cross-component prediction model parameter and the filter flag of the current chroma block; where the filter flag of the current chroma block is determined based on the filter flag of the encoded picture block around the current chroma block, and is used to indicate whether to perform filtering on the prediction value obtained based on the cross-component prediction mode; then, based on the cross-component prediction model parameter, the cross-component prediction is performed on the current chroma block to obtain the first prediction value of the current chroma block; and then, based on the filter flag and the first prediction value of the current chroma block, the second prediction value of the current chroma block is determined. That is, in the embodiments of the present disclosure, not only the chroma prediction value obtained from the multi-model cross-component prediction mode is filtered, but also the chroma prediction value obtained from other cross-component prediction modes (e.g., the cross-component prediction merge mode, and the chroma fusion derivation mode) is filtered, thereby improving the accuracy of cross-component prediction and improving the encoding and decoding performance. In addition, in the embodiments of the present disclosure, the filter flag of the current chroma block is obtained by inheriting the filter flag of the encoded block, without introducing additional bit consumption to indicate the filter flag, thereby saving codewords and improving encoding efficiency.

It should be understood that FIG. 8 and FIG. 9 are merely examples of the present disclosure, which should not be construed as limitations on the present disclosure.

The preferred embodiments of the present disclosure are described specifically above with reference to the accompanying drawings, however, the present disclosure is not limited in the specific details in the above embodiments. Within the technical concept of the present disclosure, a variety of simple modifications can be made to the technical solutions of the present disclosure, and these simple modifications all fall within the protection scope of the present disclosure. For example, the various specific technical features described in the above specific embodiments can be combined in any suitable manner if there is no contradiction. In order to avoid unnecessary repetition, various possible combinations will not be further explained in the present disclosure. For another example, the various implementations of the present disclosure can be arbitrarily combined, and as long as the combinations do not violate the concept of the present disclosure, they should also be regarded as the content disclosed in the present disclosure.

It should further be understood that, in the various method embodiments of the present disclosure, the magnitude of serial numbers of the above-mentioned processes does not mean the order of execution. The execution order of each process should be determined by its function and internal logic, and should not constitute any limitation on the implementation process of the embodiments of the present disclosure. In addition, in the embodiments of the present disclosure, the term "and/or" is only an association relationship to describe associated objects, which means that there may be three kinds of relationships. Specifically, A and/or B may indicate three cases that: A exists alone, both A and B exist, and B exists alone. In addition, a character "/" in the present disclosure generally means that related objects before and after "/" are in an "or" relationship.

The method embodiments of the present disclosure are described specifically above with reference to FIG. 8 and FIG. 9, the apparatus embodiments of the present disclosure are described specifically below with reference to FIG. 10 to FIG. 13.

FIG. 10 is a schematic block diagram of a video decoding apparatus provided in the embodiments of the present disclosure, and the video decoding apparatus 10 is applied to the above-mentioned video decoder.

As illustrated in FIG. 10, the video decoding apparatus 10 includes:

a parameter determination unit 11, configured to, in response to determining that a prediction mode for a current chroma block is a cross-component prediction mode, determine a cross-component prediction model parameter and a filter flag of the current chroma block, where the cross-component prediction model parameter is a model parameter used for predicting the current chroma block using the cross-component prediction mode, the filter flag of the current chroma block is determined based on a filter flag of a decoded picture block around the current chroma block, and a filter flag is used to indicate whether to perform filtering on a prediction value obtained based on the cross-component prediction mode;
a prediction unit 12, configured to perform cross-component prediction on the current chroma block based on the cross-component prediction model parameter, to obtain a first prediction value of the current chroma block; and
a filtering unit 13, configured to determine a second prediction value of the current chroma block based on the first prediction value and the filter flag of the current chroma block.

In some embodiments, the parameter determination unit 11 is specifically configured to determine the cross-component prediction model parameter and the filter flag of the current chroma block based on cross-component prediction information of the decoded picture block around the current chroma block, where the cross-component prediction information includes a cross-component prediction model parameter and the filter flag of the decoded picture block.

In some embodiments, the parameter determination unit 11 is specifically configured to construct a first candidate list based on the cross-component prediction information of the decoded picture block around the current chroma block,

where the first candidate list includes a plurality of candidate cross-component prediction information sets, and each cross-component prediction information set includes a candidate cross-component prediction model parameter set and a candidate filter flag; select first cross-component prediction information from the plurality of candidate cross-component prediction information sets included in the first candidate list; and determine the cross-component prediction model parameter and the filter flag of the current chroma block based on the first cross-component prediction information.

In some embodiments, the decoded picture block includes a neighboring block of the current chroma block in spatial domain, and the parameter determination unit 11 is specifically configured to add cross-component prediction information of the neighboring block of the current chroma block in spatial domain to the first candidate list according to a first preset order.

In some embodiments, in response to that a number of pieces of cross-component prediction information included in the first candidate list is less than a first preset number after adding the cross-component prediction information of the neighboring block of the current chroma block in spatial domain to the first candidate list, the parameter determination unit 11 is further configured to add cross-component prediction information of a non-neighboring block of the current chroma block in spatial domain to the first candidate list according to a second preset order.

In some embodiments, in response to that a number of pieces of cross-component prediction information included in the first candidate list is less than the first preset number after adding the cross-component prediction information of the neighboring block and the non-neighboring block of the current chroma block in spatial domain to the first candidate list, the parameter determination unit 11 is further configured to add most recently used cross-component prediction information to the first candidate list.

In some embodiments, in a case where the number of pieces of cross-component prediction information included in the first candidate list is less than the first preset number after adding the most recently used cross-component prediction information to the first candidate list, the parameter determination unit 11 is further configured to: acquire at least one default cross-component prediction model parameter set; for an i-th cross-component prediction model parameter set in the at least one cross-component prediction model parameter set, determine a filter flag corresponding to the i-th cross-component prediction model parameter set, and combine the i-th cross-component prediction model parameter set and the filter flag corresponding to the i-th cross-component prediction model parameter set into an i-th cross-component prediction information set, i being a positive integer; and add at least one determined cross-component prediction information set to the first candidate list.

In some embodiments, the parameter determination unit 11 is specifically configured to determine a default value as a value of the filter flag corresponding to the i-th cross-component prediction model parameter set, the default value is a first value or a second value, where the first value indicates to perform filtering on the prediction value obtained from the cross-component prediction mode, and the second value indicates to skip filtering on the prediction value obtained from the cross-component prediction mode.

In some embodiments, the parameter determination unit 11 is specifically configured to decode a bitstream to obtain an index of the first cross-component prediction information; and select the first cross-component prediction information from the first candidate list based on the index of the first cross-component prediction information.

In some embodiments, the parameter determination unit 11 is specifically configured determine a cross-component prediction model parameter included in the first cross-component prediction information as the cross-component prediction model parameter of the current chroma block; and determine a filter flag included in the first cross-component prediction information as the filter flag of the current chroma block.

In some embodiments, the cross-component prediction information of the decoded picture block is stored in a first storage space of the decoded picture block, and the parameter determination unit 11 is specifically configured to acquire the cross-component prediction information of the decoded picture block from the first storage space of the decoded picture block; and construct the first candidate list based on the cross-component prediction information of the decoded picture block.

In some embodiments, after determining the cross-component prediction model parameter and the filter flag of the current chroma block, the parameter determination unit 11 is further configured to store the cross-component prediction model parameter and the filter flag of the current chroma block in a first storage space of the current chroma block.

In some embodiments, the parameter determination unit 11 is specifically configured to determine the cross-component prediction model parameter of the current chroma block; and determine the filter flag of the current chroma block based on the filter flag of the decoded picture block around the current chroma block.

In some embodiments, the parameter determination unit 11 is specifically configured to construct a second candidate list based on the filter flag of the decoded picture block around the current chroma block, the second candidate list includes a plurality of candidate filter flags; and determine a candidate filter flag selected from the second candidate list as the filter flag of the current chroma block.

In some embodiments, the decoded picture block includes a neighboring block of the current chroma block in spatial domain, and the parameter determination unit 11 is specifically configured to add a filter flag of the neighboring block of the current chroma block in spatial domain to the second candidate list according to a third preset order.

In some embodiments, in response to that a number of filter flags included in the second candidate list is less than a second preset number upon adding the filter flag of the neighboring block of the current chroma block in spatial domain to the second candidate list, the parameter determination unit 11 is further configured to add a filter flag of a non-neighboring block of the current chroma block in spatial domain to the second candidate list according to a fourth preset order.

In some embodiments, in response to that the number of filter flags included in the second candidate list is less than the second preset number after adding the filter flags of the neighboring block and the non-neighboring block of the current chroma block in spatial domain to the second candidate list, the parameter determination unit 11 is further configured to add a most recently used filter flag to the second candidate list.

In some embodiments, in response to that the number of filter flags included in the second candidate list is less than the second preset number after adding the most recently used filter flag to the second candidate list, the parameter determination unit 11 is further configured to add a default filter flag to the second candidate list.

In some embodiments, the parameter determination unit 11 is specifically configured to decode a bitstream to obtain a filter flag index; and determine the filter flag of the current chroma block from the plurality of candidate filter flags included in the second candidate list based on the filter flag index.

In some embodiments, the cross-component prediction mode includes a cross-component prediction merge mode or a chroma fusion derivation mode.

In some embodiments, the filtering unit 13 is specifically configured to, in response to the filter flag of the current chroma block indicating to perform filtering on the first prediction value, perform filtering on the first prediction value through a filter, to obtain a third prediction value of the current block; in response to the filter flag of the current chroma block indicating to skip filtering on the first prediction value, determine the first prediction value as the third prediction value of the current block; and obtain the second prediction value of the current block based on the third prediction value of the current block.

In some embodiments, the filtering unit 13 is specifically configured to determine, in response to the prediction mode being the cross-component prediction merge mode, the third prediction value as the second prediction value.

In some embodiments, the filtering unit 13 is specifically configured to determine, in response to the prediction mode being the chroma fusion derivation mode, a fourth prediction value of the current chroma block based on a non-cross component prediction mode; and obtain the second prediction value based on the third prediction value and the fourth prediction value.

It should be understood that, the apparatus embodiments and the method embodiments may correspond to each other, and similar descriptions may refer to the method embodiments. To avoid repeated descriptions, it will not be described herein. Specifically, the apparatus 10 illustrated in FIG. 10 may perform a decoding method at the decoder side of the embodiments of the present disclosure, and the aforementioned and other operations and/or functions of various units in the apparatus 10 are respectively for implementing the corresponding processes in various methods of the decoding method of the above-mentioned decoder side. For the sake of brevity, they will not be repeated herein.

FIG. 11 is a schematic block diagram of a video encoding apparatus provided in an embodimen of the present disclosure, and the video encoding apparatus is applied to the above-mentioned encoder.

As illustrated in FIG. 11, the video encoding apparatus 20 may include:

a parameter determination unit 21, configured to, in response to determining that a prediction mode for a current chroma block is a cross-component prediction mode, determine a cross-component prediction model parameter and a filter flag of the current chroma block, where the cross-component prediction model parameter is a model parameter used for predicting the current chroma block using the cross-component prediction mode, the filter flag of the current chroma block is determined based on a filter flag of an encoded picture block around the current chroma block, and a filter flag is used to indicate whether to perform filtering on a prediction value obtained based on the cross-component prediction mode;

a prediction unit 22, configured to perform cross-component prediction on the current chroma block based on the cross-component prediction model parameter, to obtain a first prediction value of the current chroma block; and

a filtering unit 23, configured to determine a second prediction value of the current chroma block based on the first prediction value and the filter flag of the current chroma block.

In some embodiments, the parameter determination unit 21 is specifically configured to determine the cross-component prediction model parameter and the filter flag of the current chroma block based on cross-component prediction information of the encoded picture block around the current chroma block, where the cross-component prediction information includes a cross-component prediction model parameter and the filter flag of the encoded picture block.

In some embodiments, the parameter determination unit 21 is specifically configured to: construct a first candidate list based on the cross-component prediction information of the encoded picture block around the current chroma block, where the first candidate list include a plurality of candidate cross-component prediction information sets, and each candidate cross-component prediction information set includes a candidate cross-component prediction model parameter and a candidate filter flag; select first cross-component prediction information from the plurality of candidate cross-component prediction information sets included in the first candidate list; and determine the cross-component prediction model parameter and the filter flag of the current chroma block based on the first cross-component prediction information.

In some embodiments, the encoded picture block includes a neighboring block of the current chroma block in spatial domain, and the parameter determination unit 21 is specifically configured to add cross-component prediction information of the neighboring block of the current chroma block in spatial domain to the first candidate list according to a first preset order.

In some embodiments, in response to that a number of pieces of cross-component prediction information included in the first candidate list is less than a first preset number after adding the cross-component prediction information of the neighboring block of the current chroma block in spatial domain to the first candidate list, the parameter determination unit 21 is further configured to add cross-component prediction information of a non-neighboring block of the current chroma block in spatial domain to the first candidate list according to a second preset order.

In some embodiments, in response to that a number of pieces of cross-component prediction information included in the first candidate list is less than the first preset number after adding the cross-component prediction information of the neighboring block and the non-neighboring block of the current chroma block in spatial domain to the first candidate list, the parameter determination unit 21 is further configured to add most recently used cross-component prediction information to the first candidate list.

In some embodiments, in a case where the number of pieces of cross-component prediction information included in the first candidate list is less than the first preset number after adding the most recently used cross-component prediction information to the first candidate list, the parameter determination unit 21 is further configured to: acquire at least one default cross-component prediction model parameter set; for an i-th cross-component prediction model parameter set in the at least one cross-component prediction model parameter set, determine a filter flag corresponding to the i-th cross-component prediction model parameter set, and combine the i-th cross-component prediction model parameter set and the filter flag corresponding to the i-th cross-component prediction model parameter set into an i-th cross-component prediction information set, i being a positive integer; and add at least one determined cross-component prediction information set to the first candidate list.

In some embodiments, the parameter determination unit 21 is specifically configured to determine a default value as a value of the filter flag corresponding to the i-th cross-component prediction model parameter set, the default value is a first value or a second value, where the first value indicates that an i-th filter flag indicates to perform filtering on the prediction value obtained from the cross-component prediction mode, and the second value indicates that the i-th filter flag indicates to skip filtering on the prediction value obtained from the cross-component prediction mode.

In some embodiments, the parameter determination unit 21 is specifically configured to determine a respective first cost upon performing cross-component prediction on the current chroma block based on each of the plurality of candidate cross-component prediction information sets included in the first candidate list respectively, and select the first cross-component prediction information from the plurality of candidate cross-component prediction information sets included in the first candidate list based on the first cost.

In some embodiments, the parameter determination unit 21 is further configured to write an index of the first cross-component prediction information into a bitstream.

In some embodiments, the parameter determination unit 21 is specifically configured to determine a candidate cross-component prediction model parameter included in the first cross-component prediction information as the cross-component prediction model parameter of the current chroma block; and determine a candidate filter flag included in the first cross-component prediction information as the filter flag of the current chroma block.

In some embodiments, the cross-component prediction information of the encoded picture block is stored in a first storage space of the encoded picture block, and the parameter determination unit 21 is specifically configured to acquire the cross-component prediction information of the encoded picture block from the first storage space of the encoded picture block; and construct the first candidate list based on the cross-component prediction information of the encoded picture block.

In some embodiments, after determining the cross-component prediction model parameter and the filter flag of the current chroma block, the parameter determination unit 21 is further configured to store the cross-component prediction model parameter and the filter flag of the current chroma block in a first storage space of the current chroma block.

In some embodiments, the parameter determination unit 21 is further configured to: determine the cross-component prediction model parameter of the current chroma block; and determine the filter flag of the current chroma block based on the filter flag of the encoded picture block around the current chroma block.

In some embodiments, the parameter determination unit 21 is specifically configured to construct a second candidate list based on the filter flag of the encoded picture block around the current chroma block, the second candidate list includes a plurality of candidate filter flags; and determine a candidate filter flag selected from the second candidate list as the filter flag of the current chroma block.

In some embodiments, the encoded picture block includes a neighboring block of the current chroma block in spatial domain, and the parameter determination unit 21 is specifically configured to add a filter flag of the neighboring block of the current chroma block in spatial domain to the second candidate list according to a third preset order.

In some embodiments, in response to that a number of filter flags included in the second candidate list is less than a second preset number upon adding the filter flag of the neighboring block of the current chroma block in spatial domain to the second candidate list, the parameter determination unit 21 is further configured to add a filter flag of a non-neighboring block of the current chroma block in spatial domain to the second candidate list according to a fourth preset order.

In some embodiments, in response to that the number of filter flags included in the second candidate list is less than the second preset number after adding the filter flags of the neighboring block and the non-neighboring block of the current chroma block in spatial domain to the second candidate list, the parameter determination unit 21 is further configured to add a most recently used filter flag to the second candidate list.

In some embodiments, in response to that the number of filter flags included in the second candidate list is less than the second preset number after adding the most recently used filter flag to the second candidate list, the parameter determination unit 21 is further configured to add a default filter flag to the second candidate list.

In some embodiments, the parameter determination unit 21 is specifically configured to: determine a respective second cost upon performing filtering on the first prediction value of the current chroma block based on each of the plurality of candidate filter flags included in the second candidate list, and select a candidate filter flag from the plurality of candidate filter flags included in the second candidate list based on the second flag, and determine the selected candidate filter flag as the filter flag of the current chroma block.

In some embodiments, the parameter determination unit 21 is further configured to write a filter flag index of the current chroma block into a bitstream.

In some embodiments, the cross-component prediction mode includes a cross-component prediction merge mode or a chroma fusion derivation mode.

In some embodiments, the filtering unit 23 is specifically configured to: in response to the filter flag of the current chroma block indicating to perform filtering on the first prediction value, perform filtering on the first prediction value through a filter, to obtain a third prediction value of the current block; or in response to the filter flag of the current chroma block indicating to skip filtering on the first prediction value, determine the first prediction value as the third prediction value of the current block; and obtain the second prediction value of the current block based on the third prediction value of the current block.

In some embodiments, the filtering unit 23 is specifically configured to: in response to the prediction mode being the cross-component prediction merge mode, determine the third prediction value as the second prediction value.

In some embodiments, the filtering unit 23 is specifically configured to: in response to the prediction mode being the chroma fusion derivation mode, determine a fourth prediction value of the current chroma block based on a non-cross component prediction mode; and obtain the second prediction value based on the third prediction value and the fourth prediction value.

It should be understood that, the apparatus embodiments and the method embodiments may correspond to each other, and similar descriptions may refer to the method embodiments, which will not be repeated herein for brevity. Specifically, the apparatus 20 illustrated in FIG. 11 may correspond to the corresponding subject in the encoding methods at the encoder side that performs the embodiments of the present disclosure, and the aforementioned and other operations and/or functions of various units in the apparatus 20 are respectively for implementing the corresponding processes in the encoding methods at the encoder side, which will not be repeated herein for brevity.

The above describes the apparatus and system of the embodiments of the present disclosure from the perspective of functional units with reference to the accompanying drawings. It should be understood that the functional units may be implemented in a hardware form, may be implemented by instructions in a software form, or may be implemented by a combination of hardware and software units. Specifically, various steps of the method embodiments in the present disclosure may be completed by an integrated logic circuit of hardware in the processor and/or instructions in the software form. The steps of the method disclosed in the embodiments of the present disclosure may be directly embodied as being performed and completed by a hardware decoding processor, or by using a combination of hardware and software units in the decoding processor. Optionally, a software unit may be located in a mature storage medium in the art, such as a random memory, a flash, a read-only memory, a programmable read-only memory, an electrically erasable programmable memory, or a register, etc. The storage medium is located in a memory, and a processor reads information in the memory and completes the steps in the above method embodiments in combination with its hardware.

FIG. 12 is a schematic block diagram of an electronic device provided by the embodiments of the present disclosure.

As illustrated in FIG. 12, the electronic device 30 may be a video encoder or a video decoder as described in the embodiments of the present disclosure, and the electronic device 30 may include:

a memory 33 and a processor 32, where the memory 33 is configured to store a computer program 34 and transmit the computer program 34 to the processor 32. In other words, the processor 32 may invoke and execute the computer program 34 from the memory 33, so as to implement the method in the embodiments of the present disclosure.

For example, the processor 32 may be configured to perform the steps in the above methods 200 according to instructions in the computer program 34.

In some embodiments of the present disclosure, the processor 32 may include but is not limited to:

a general-purpose processor, a digital signal processor (DSP), an application specific integrated circuit (ASIC), a field programmable gate array (FPGA) or other programmable logic devices, a discrete gate or transistor logic device, a discrete hardware component.

In some embodiments of the present disclosure, the memory 33 includes but is not limited to:

a volatile (transitory) memory and/or a non-volatile (non-transitory) memory. Herein, the non-volatile memory may be a read-only memory (ROM), a programmable ROM (PROM), an erasable programmable PROM (EPROM), an electrically EPROM (EEPROM) or a flash. The volatile memory may be a random access memory (RAM), which is used as an external cache. By way of illustrative rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchronous link (synch link) DRAM (SLDRAM) and a direct rambus RAM (DR RAM).

In some embodiments of the present disclosure, the computer program 34 may be divided into one or more units, the one or more units are stored in the memory 33 and executed by the processor 32 to complete the methods provided in the present disclosure. The one or more units may be a series of computer program instruction segments capable of completing specific functions, and the instruction segments are used to describe the execution process of the computer program 34 in the electronic device 30.

As illustrated in FIG. 12, the electronic device 30 may further include:

a transceiver 33, and the transceiver 33 is connected to the processor 32 or the memory 33.

Here, the processor 32 may control the transceiver 33 to communicate with other devices, and specifically, may transmit information or data to other devices, or receive information or data transmitted from other devices. The transceiver 33 may include a transmitter and a receiver. The transceiver 33 may further include antenna(s), and the number of antennas may be one or more.

It should be understood that the various components of the electronic device 30 are connected via a bus system, and the bus system includes not only a data bus, but also a power bus, a control bus and a status signal bus.

FIG. 13 is a schematic block diagram of a video encoding and decoding system provided in the embodiments of the present disclosure.

As illustrated in FIG. 13, the video encoding and decoding system 40 may include: a video encoder 41 and a video decoder 42; the video encoder 41 is configured to perform the video encoding method involved in the embodiments of the present disclosure, and the video decoder 42 is configured to perform the video decoding method involved in the embodiments of the present disclosure.

The present disclosure further provides a computer storage medium, and a computer program is stored on the computer storage medium. The computer program, upon being executed by a computer, enables the computer to perform the methods in the above method embodiments. In other words, a computer program product including instructions is further provided in the embodiments of the present disclosure, and the instructions, upon being executed by a computer, enable the computer to perform the methods in the above method embodiments.

The present disclosure further provides a bitstream, and the bitstream is generated according to the above encoding method.

When the above embodiments are implemented by using software, they may be implemented in the form of a computer program product in whole or in portion. The computer program product includes one or more computer instructions. When the computer program instruction(s) are loaded and executed on a computer, processes or functions of the embodiments of the present disclosure are generated in whole or in portion. The computer may be a general-purpose computer, a dedicated computer, a computer network, or other programmable apparatus. The computer instructions may be stored in a computer-readable storage medium, or transmitted from a computer-readable storage medium to another computer-readable storage medium. For example, the computer instructions may be transmitted from a website, computer, server, or data center to another website, computer, server, or data center via wired means (e.g., coaxial cable, fiber optic, digital subscriber line (DSL)) or wireless means (e.g., infrared, radio, microwave). The computer-readable storage medium may be any available medium that is capable of being accessed by the computer, or a data storage device, such as including a server or a data center that integrates one or more available media. An available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

Those ordinary skilled in the art may realize that units and algorithm steps of the examples described in combination with the embodiments disclosed in the present disclosure can be implemented in electronic hardware or in a combination of computer software and electronic hardware. Whether these functions are performed by hardware or software depends on a specific application and a design constraint of the technical solution. A skilled person may use different methods for each specific application, to implement the described functions, but such implementation should not be considered beyond the scope of the present disclosure.

In the several embodiments provided in the present disclosure, it should be understood that, the disclosed systems, apparatus, and method may be implemented in other ways. For example, the apparatus embodiments described above are only schematic, for example, division of the units is only division with logical functions, and there may be other division methods in actual implementations, such as, a plurality of units or components may be combined or integrated into another system, or some features may be ignored or not performed. Furthermore, the coupling or direct coupling or communication connection between each other as shown or discussed may be indirect coupling or communication connection of apparatus or units via some interfaces, which may be electrical, mechanical, or in other forms.

The units described as separate components may be or may not be physically separated, and the components illustrated as units may be or may not be physical units; that is, they may be located in one place, or may be distributed onto a plurality of network units. All or a portion of the units may be selected according to actual needs to implement the purpose of the schemes of the embodiments. For example, various functional units in the various embodiments of the present disclosure may be integrated into one processing unit, or the various units may exist physically separately, or two or more units may be integrated into one unit.

The above contents are only specific implementations of the present disclosure, but the protection scope of the present disclosure is not limited thereto, and changes or substitutions, which may be easily thought by any skilled familiar with this technical field, within the technical scope disclosed in the present disclosure should be all covered within the protection scope of the present disclosure. Therefore, the protection scope of the present disclosure should be subject to the protection scope of the claims.

**Claims**

1. A video decoding method, comprising:

   in response to determining that a prediction mode for a current chroma block is a cross-component prediction mode, determining a cross-component prediction model parameter and a filter flag of the current chroma block, wherein the cross-component prediction model parameter is a model parameter used for predicting the current chroma block using the cross-component prediction mode, the filter flag of the current chroma block is determined based on a filter flag of a decoded picture block around the current chroma block, and a filter flag is used to indicate whether to perform filtering on a prediction value obtained based on the cross-component prediction mode;
   performing cross-component prediction on the current chroma block based on the cross-component prediction model parameter, to obtain a first prediction value of the current chroma block; and
   determining a second prediction value of the current chroma block based on the first prediction value and the filter flag of the current chroma block.

2. The method according to claim 1, wherein determining the cross-component prediction model parameter and the filter flag of the current chroma block comprises:
   determining the cross-component prediction model parameter and the filter flag of the current chroma block based on cross-component prediction information of the decoded picture block around the current chroma block, wherein the cross-component prediction information comprises a cross-component prediction model parameter and the filter flag of the decoded picture block.

3. The method according to claim 2, wherein determining the cross-component prediction model parameter and the filter flag of the current chroma block based on the cross-component prediction information of the decoded picture block around the current chroma block comprises:

   constructing a first candidate list based on the cross-component prediction information of the decoded picture block around the current chroma block, wherein the first candidate list comprises a plurality of candidate cross-component prediction information sets, and each cross-component prediction information set comprises a candidate cross-component prediction model parameter set and a candidate filter flag;
   selecting first cross-component prediction information from the plurality of candidate cross-component prediction information sets comprised in the first candidate list; and
   determining the cross-component prediction model parameter and the filter flag of the current chroma block based on the first cross-component prediction information.

**4.** The method according to claim 3, wherein the decoded picture block comprises a neighboring block of the current chroma block in spatial domain, and constructing the first candidate list based on the cross-component prediction information of the decoded picture block comprises:
adding cross-component prediction information of the neighboring block of the current chroma block in spatial domain to the first candidate list according to a first preset order.

**5.** The method according to claim 4, wherein in response to that a number of pieces of cross-component prediction information comprised in the first candidate list is less than a first preset number after adding the cross-component prediction information of the neighboring block of the current chroma block in spatial domain to the first candidate list, the method further comprises:
adding cross-component prediction information of a non-neighboring block of the current chroma block in spatial domain to the first candidate list according to a second preset order.

**6.** The method according to claim 5, wherein in response to that a number of pieces of cross-component prediction information comprised in the first candidate list is less than the first preset number after adding the cross-component prediction information of the neighboring block and the non-neighboring block of the current chroma block in spatial domain to the first candidate list, the method further comprises:
adding most recently used cross-component prediction information to the first candidate list.

**7.** The method according to claim 6, wherein in response to that a number of pieces of cross-component prediction information comprised in the first candidate list is less than the first preset number after adding the most recently used cross-component prediction information to the first candidate list, the method further comprises:

acquiring at least one default cross-component prediction model parameter set;
for an i-th cross-component prediction model parameter set in the at least one cross-component prediction model parameter set, determining a filter flag corresponding to the i-th cross-component prediction model parameter set, and combining the i-th cross-component prediction model parameter set and the filter flag corresponding to the i-th cross-component prediction model parameter set into an i-th cross-component prediction information set, wherein i is a positive integer; and
adding at least one determined cross-component prediction information set to the first candidate list.

**8.** The method according to claim 7, wherein determining the filter flag corresponding to the i-th cross-component prediction model parameter set comprises:
determining a default value as a value of the filter flag corresponding to the i-th cross-component prediction model parameter set, the default value being a first value or a second value, wherein the first value indicates to perform filtering on the prediction value obtained from the cross-component prediction mode, and the second value indicates to skip filtering on the prediction value obtained from the cross-component prediction mode.

**9.** The method according to claim 3, wherein selecting the first cross-component prediction information from the first candidate list comprises:

decoding a bitstream to obtain an index of the first cross-component prediction information; and
selecting the first cross-component prediction information from the first candidate list based on the index of the first cross-component prediction information.

**10.** The method according to claim 3, wherein determining the cross-component prediction model parameter and the filter flag of the current chroma block based on the first cross-component prediction information comprises:

determining a cross-component prediction model parameter comprised in the first cross-component prediction information as the cross-component prediction model parameter of the current chroma block; and
determining a filter flag comprised in the first cross-component prediction information as the filter flag of the current chroma block.

**11.** The method according to claim 3, wherein the cross-component prediction information of the decoded picture block is stored in a first storage space of the decoded picture block, and constructing the first candidate list based on the cross-component prediction information of the decoded picture block around the current chroma block comprises:

acquiring the cross-component prediction information of the decoded picture block from the first storage space of the decoded picture block; and
constructing the first candidate list based on the cross-component prediction information of the decoded picture block.

12. The method according to claim 3, wherein after determining the cross-component prediction model parameter and the filter flag of the current chroma block, the method further comprises:
storing the cross-component prediction model parameter and the filter flag of the current chroma block in a first storage space of the current chroma block.

13. The method according to claim 1, wherein determining the cross-component prediction model parameter and the filter flag of the current chroma block comprises:

determining the cross-component prediction model parameter of the current chroma block; and
determining the filter flag of the current chroma block based on the filter flag of the decoded picture block around the current chroma block.

14. The method according to claim 13, wherein determining the filter flag of the current chroma block based on the filter flag of the decoded picture block around the current chroma block comprises:

constructing a second candidate list based on the filter flag of the decoded picture block around the current chroma block, the second candidate list comprising a plurality of candidate filter flags; and
determining a candidate filter flag selected from the second candidate list as the filter flag of the current chroma block.

15. The method according to claim 14, wherein the decoded picture block comprises a neighboring block of the current chroma block in spatial domain, and constructing the second candidate list based on the filter flag of the decoded picture block around the current chroma block comprises:
adding a filter flag of the neighboring block of the current chroma block in spatial domain to the second candidate list according to a third preset order.

16. The method according to claim 15, wherein in response to that a number of filter flags comprised in the second candidate list is less than a second preset number upon adding the filter flag of the neighboring block of the current chroma block in spatial domain to the second candidate list, the method further comprises:
adding a filter flag of a non-neighboring block of the current chroma block in spatial domain to the second candidate list according to a fourth preset order.

17. The method according to claim 16, wherein in response to that the number of filter flags comprised in the second candidate list is less than the second preset number after adding the filter flags of the neighboring block and the non-neighboring block of the current chroma block in spatial domain to the second candidate list, the method further comprises:
adding a most recently used filter flag to the second candidate list.

18. The method according to claim 17, wherein in response to that the number of filter flags comprised in the second candidate list is less than the second preset number after adding the most recently used filter flag to the second candidate list, the method further comprises:
adding a default filter flag to the second candidate list.

19. The method according to claim 14, wherein determining the candidate filter flag selected from the second candidate list as the filter flag of the current chroma block comprises:

decoding a bitstream to obtain a filter flag index; and
determining the filter flag of the current chroma block from the plurality of candidate filter flags comprised in the second candidate list based on the filter flag index.

20. The method according to claim 1, wherein the cross-component prediction mode comprises a cross-component prediction merge mode or a chroma fusion derivation mode.

21. The method according to claim 20, wherein determining the second prediction value of the current chroma block based on the first prediction value and the filter flag of the current chroma block comprises:

in response to the filter flag of the current chroma block indicating to perform filtering on the first prediction value, performing filtering on the first prediction value through a filter, to obtain a third prediction value of the current block; orin response to the filter flag of the current chroma block indicating to skip filtering on the first prediction value, determining the first prediction value as the third prediction value of the current block; and

obtaining the second prediction value of the current block based on the third prediction value of the current block.

22. The method according to claim 21, wherein obtaining the second prediction value of the current block based on the third prediction value of the current block comprises:
in response to the prediction mode being the cross-component prediction merge mode, determining the third prediction value as the second prediction value.

23. The method according to claim 21, wherein obtaining the second prediction value of the current block based on the third prediction value of the current block comprises:

in response to the prediction mode being the chroma fusion derivation mode, determining a fourth prediction value of the current chroma block based on a non-cross component prediction mode; and

obtaining the second prediction value based on the third prediction value and the fourth prediction value.

24. A video encoding method, comprising:

in response to determining that a prediction mode for a current chroma block is a cross-component prediction mode, determining a cross-component prediction model parameter and a filter flag of the current chroma block, wherein the cross-component prediction model parameter is a model parameter used for predicting the current chroma block using the cross-component prediction mode, the filter flag of the current chroma block is determined based on a filter flag of an encoded picture block around the current chroma block, and a filter flag is used to indicate whether to perform filtering on a prediction value obtained based on the cross-component prediction mode;

performing cross-component prediction on the current chroma block based on the cross-component prediction model parameter, to obtain a first prediction value of the current chroma block; and

determining a second prediction value of the current chroma block based on the first prediction value and the filter flag of the current chroma block.

25. The method according to claim 24, wherein determining the cross-component prediction model parameter and the filter flag of the current chroma block comprises:
determining the cross-component prediction model parameter and the filter flag of the current chroma block based on cross-component prediction information of the encoded picture block around the current chroma block, wherein the cross-component prediction information comprises a cross-component prediction model parameter and the filter flag of the encoded picture block.

26. The method according to claim 25, wherein determining the cross-component prediction model parameter and the filter flag of the current chroma block based on the cross-component prediction information of the encoded picture block around the current chroma block comprises:

constructing a first candidate list based on the cross-component prediction information of the encoded picture block around the current chroma block, wherein the first candidate list comprises a plurality of candidate cross-component prediction information sets, and each candidate cross-component prediction information set comprises a candidate cross-component prediction model parameter and a candidate filter flag;

selecting first cross-component prediction information from the plurality of candidate cross-component prediction information sets comprised in the first candidate list; and

determining the cross-component prediction model parameter and the filter flag of the current chroma block based on the first cross-component prediction information.

27. The method according to claim 26, wherein the encoded picture block comprises a neighboring block of the current chroma block in spatial domain, and constructing the first candidate list based on the cross-component prediction information of the encoded picture block comprises:
adding cross-component prediction information of the neighboring block of the current chroma block in spatial domain to the first candidate list according to a first preset order.

28. The method according to claim 27, wherein in response to that a number of pieces of cross-component prediction information comprised in the first candidate list is less than a first preset number after adding the cross-component prediction information of the neighboring block of the current chroma block in spatial domain to the first candidate list, the method further comprises:
adding cross-component prediction information of a non-neighboring block of the current chroma block in spatial domain to the first candidate list according to a second preset order.

29. The method according to claim 28, wherein in response to that a number of pieces of cross-component prediction information comprised in the first candidate list is less than the first preset number after adding the cross-component prediction information of the non-neighboring block of the current chroma block in spatial domain to the first candidate list, the method further comprises:
adding most recently used cross-component prediction information to the first candidate list.

30. The method according to claim 29, wherein in response to that a number of pieces of cross-component prediction information comprised in the first candidate list is less than the first preset number after adding the most recently used cross-component prediction information to the first candidate list, the method further comprises:

acquiring at least one default cross-component prediction model parameter set;
for an i-th cross-component prediction model parameter set in the at least one cross-component prediction model parameter set, determining a filter flag corresponding to the i-th cross-component prediction model parameter set, and combining the i-th cross-component prediction model parameter set and the filter flag corresponding to the i-th cross-component prediction model parameter set into an i-th cross-component prediction information set, wherein i is a positive integer; and
adding at least one determined cross-component prediction information set to the first candidate list.

31. The method according to claim 30, wherein determining the filter flag corresponding to the i-th cross-component prediction model parameter set comprises:
determining a default value as a value of the filter flag corresponding to the i-th cross-component prediction model parameter set, the default value being a first value or a second value, wherein the first value indicates that an i-th filter flag indicates to perform filtering on the prediction value obtained from the cross-component prediction mode, and the second value indicates that the i-th filter flag indicates to skip filtering on the prediction value obtained from the cross-component prediction mode.

32. The method according to claim 26, wherein selecting the first cross-component prediction information from the first candidate list comprises:

determining a respective first cost upon performing cross-component prediction on the current chroma block based on each of the plurality of candidate cross-component prediction information sets comprised in the first candidate list; and
selecting the first cross-component prediction information from the plurality of candidate cross-component prediction information sets comprised in the first candidate list based on the first cost.

33. The method according to claim 26, further comprising:
writing an index of the first cross-component prediction information into a bitstream.

34. The method according to claim 26, wherein determining the cross-component prediction model parameter and the filter flag of the current chroma block based on the first cross-component prediction information comprises:

determining a candidate cross-component prediction model parameter comprised in the first cross-component prediction information as the cross-component prediction model parameter of the current chroma block; and
determining a candidate filter flag comprised in the first cross-component prediction information as the filter flag of the current chroma block.

35. The method according to claim 26, wherein the cross-component prediction information of the encoded picture block is stored in a first storage space of the encoded picture block, and constructing the first candidate list based on the cross-component prediction information of the encoded picture block around the current chroma block comprises:

acquiring the cross-component prediction information of the encoded picture block from the first storage space of the encoded picture block; and

constructing the first candidate list based on the cross-component prediction information of the encoded picture block.

36. The method according to claim 26, wherein after determining the cross-component prediction model parameter and the filter flag of the current chroma block, the method further comprises:
   storing the cross-component prediction model parameter and the filter flag of the current chroma block in a first storage space of the current chroma block.

37. The method according to claim 24, wherein determining the cross-component prediction model parameter and the filter flag of the current chroma block comprises:

   determining the cross-component prediction model parameter of the current chroma block; and
   determining the filter flag of the current chroma block based on the filter flag of the encoded picture block around the current chroma block.

38. The method according to claim 37, wherein determining the filter flag of the current chroma block based on the filter flag of the encoded picture block around the current chroma block comprises:

   constructing a second candidate list based on the filter flag of the encoded picture block around the current chroma block, the second candidate list comprising a plurality of candidate filter flags; and
   determining a candidate filter flag selected from the second candidate list as the filter flag of the current chroma block.

39. The method according to claim 38, wherein the encoded picture block comprises a neighboring block of the current chroma block in spatial domain, and constructing the second candidate list based on the filter flag of the encoded picture block around the current chroma block comprises:
   adding a filter flag of the neighboring block of the current chroma block in spatial domain to the second candidate list according to a third preset order.

40. The method according to claim 39, wherein in response to that a number of filter flags comprised in the second candidate list is less than a second preset number upon adding the filter flag of the neighboring block of the current chroma block in spatial domain to the second candidate list, the method further comprises:
   adding a filter flag of a non-neighboring block of the current chroma block in spatial domain to the second candidate list according to a fourth preset order.

41. The method according to claim 40, wherein in response to that the number of filter flags comprised in the second candidate list is less than the second preset number after adding the filter flags of the neighboring block and the non-neighboring block of the current chroma block in spatial domain to the second candidate list, the method further comprises:
   adding a most recently used filter flag to the second candidate list.

42. The method according to claim 41, wherein in response to that the number of filter flags comprised in the second candidate list is less than the second preset number after adding the most recently used filter flag to the second candidate list, the method further comprises:
   adding a default filter flag to the second candidate list.

43. The method according to claim 38, wherein determining the candidate filter flag selected from the second candidate list as the filter flag of the current chroma block comprises:

   determining a respective second cost upon performing filtering on the first prediction value of the current chroma block based on each of the plurality of candidate filter flags comprised in the second candidate list; and
   selecting a candidate filter flag from the plurality of candidate filter flags comprised in the second candidate list based on the second flag, and determining the selected candidate filter flag as the filter flag of the current chroma block.

44. The method according to claim 43, further comprising:

writing a filter flag index of the current chroma block into a bitstream.

45. The method according to claim 24, wherein the cross-component prediction mode comprises a cross-component prediction merge mode or a chroma fusion derivation mode.

46. The method according to claim 45, wherein determining the second prediction value of the current chroma block based on the first prediction value and the filter flag of the current chroma block comprises:

in response to the filter flag of the current chroma block indicating to perform filtering on the first prediction value, performing filtering on the first prediction value through a filter, to obtain a third prediction value of the current block; or
in response to the filter flag of the current chroma block indicating to skip filtering on the first prediction value, determining the first prediction value as the third prediction value of the current block; and
obtaining the second prediction value of the current block based on the third prediction value of the current block.

47. The method according to claim 46, wherein obtaining the second prediction value of the current block based on the third prediction value of the current block comprises:
in response to the prediction mode being the cross-component prediction merge mode, determining the third prediction value as the second prediction value.

48. The method according to claim 47, wherein obtaining the second prediction value of the current block based on the third prediction value of the current block comprises:

in response to the prediction mode being the chroma fusion derivation mode, determining a fourth prediction value of the current chroma block based on a non-cross component prediction mode; and
obtaining the second prediction value based on the third prediction value and the fourth prediction value.

49. A video decoding apparatus, comprising:

a parameter determination unit, configured to, in response to determining that a prediction mode for a current chroma block is a cross-component prediction mode, determine a cross-component prediction model parameter and a filter flag of the current chroma block, wherein the cross-component prediction model parameter is a model parameter used for predicting the current chroma block using the cross-component prediction mode, the filter flag of the current chroma block is determined based on a filter flag of a decoded picture block around the current chroma block, and a filter flag is used to indicate whether to perform filtering on a prediction value obtained based on the cross-component prediction mode;
a prediction unit, configured to perform cross-component prediction on the current chroma block based on the cross-component prediction model parameter, to obtain a first prediction value of the current chroma block; and
a filtering unit, configured to determine a second prediction value of the current chroma block based on the first prediction value and the filter flag of the current chroma block.

50. A video encoding apparatus, comprising:

a parameter determination unit, configured to, in response to determining that a prediction mode for a current chroma block is a cross-component prediction mode, determine a cross-component prediction model parameter and a filter flag of the current chroma block, wherein the cross-component prediction model parameter is a model parameter used for predicting the current chroma block using the cross-component prediction mode, the filter flag of the current chroma block is determined based on a filter flag of an encoded picture block around the current chroma block, and a filter flag is used to indicate whether to perform filtering on a prediction value obtained based on the cross-component prediction mode;
a prediction unit, configured to perform cross-component prediction on the current chroma block based on the cross-component prediction model parameter, to obtain a first prediction value of the current chroma block; and
a filtering unit, configured to determine a second prediction value of the current chroma block based on the first prediction value and the filter flag of the current chroma block.

51. An electronic device, comprising: a processor and a memory; wherein

the memory is configured to store a computer program; and

the processor is configured to invoke and execute the computer program stored in the memory, to implement the method according to any one of claims 1 to 23 or 24 to 48.

52. A video encoding and decoding system, comprising: a video encoder and a video decoder; wherein

the video decoder is configured to implement the method according to any one of claims 1 to 23; and
the video encoder is configured to implement the method according to any one of claims 24 to 48.

53. A computer-readable storage medium, wherein the computer-readable storage medium is configured to store a computer program; and
the computer program enables a computer to execute the method according to any one of claims 1 to 23 or 24 to 48.

FIG. 1

FIG. 2

FIG. 3

FIG. 4A

FIG. 4B

EP 4 742 673 A1

0 (vertical)

| M | A | B | C | D | E | F | G | H |
| I | | | | | | | | |
| J | | | | | | | | |
| K | | | | | | | | |
| L | | | | | | | | |

FIG. 5A

1 (horizontal)

| M | A | B | C | D | E | F | G | H |
| I | | | | | | | | |
| J | | | | | | | | |
| K | | | | | | | | |
| L | | | | | | | | |

FIG. 5B

2 (DC)

| M | A | B | C | D | E | F | G | H |
| I | | | | | | | | |
| J | | Mean(A.. | | | | | | |
| K | | D,I..L) | | | | | | |
| L | | | | | | | | |

FIG. 5C

3

FIG. 5D

4

FIG. 5E

5

FIG. 5F

6

FIG. 5G

7

FIG. 5H

8

FIG. 5I

Reference luma sample

Reference luma sample

Reconstructed luma sample

Downsampled reference luma sample

down- sampled luma sample

Downsampled reference luma sample

Linear model

Reference chroma sample

Chroma sample to be predicted

Reference chroma sample

Chroma prediction value

FIG. 6A

FIG. 6B

FIG. 6C

FIG. 6D

FIG. 6E

FIG. 6F

FIG. 7A

FIG. 7B

1/16

FIG. 7C

| In response to determining that a prediction mode for a current chroma block is a cross-component prediction mode, determining a cross-component prediction model parameter and a filter flag of the current chroma block | S101 |

| Performing a cross-component prediction on the current chroma block based on the cross-component prediction model parameter, to obtain a first prediction value of the current chroma block | S102 |

| Determining a second prediction value of the current chroma block based on the filter flag of the current chroma block and the first prediction value | S103 |

FIG. 8

In response to determining that a prediction mode for a current chroma block is a cross-component prediction mode, determining a cross-component prediction model parameter and a filter flag of the current chroma block ⟩ S201

Performing cross-component prediction on the current chroma block based on the cross-component prediction model parameter, to obtain a first prediction value of the current chroma block ⟩ S202

Determining a second prediction value of the current chroma block based on the filter flag of the current chroma block and the first prediction value ⟩ S203

FIG. 9

Video decoding apparatus 10

Parameter determination unit 11

Prediction unit 12

Filtering unit 13

FIG. 10

Video encoding apparatus 20

Parameter determination unit 21

Prediction unit 22

Filtering unit 23

FIG. 11

30

Electronic device

33

Transceiver

31 32

Memory

Computer program

Processor

34

FIG. 12

Video encoding and decoding system 40

Video encoder 41 — Video decoder 42

FIG. 13

## INTERNATIONAL SEARCH REPORT

| International application No. |
|---|
| **PCT/CN2023/105584** |

**A.    CLASSIFICATION OF SUBJECT MATTER**

H04N 19/52(2014.01)i;   H04N 19/61(2014.01)i;   H04N19/147(2014.01)i;   H04N19/132(2014.01)i

According to International Patent Classification (IPC) or to both national classification and IPC

**B.    FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXT; CNKI; 3GPP: 跨分量预测, 色度, 预测, 滤波, 标识, 标志, 标记, 相邻, 邻近, 周围, 四周, 邻接, TSCPM, chroma, predic+, filter+, sign+, indicat+, adjacen+, surround+

**C.    DOCUMENTS CONSIDERED TO BE RELEVANT**

| Category* | Citation of document, with indication, where appropriate, of the relevant passages | Relevant to claim No. |
|---|---|---|
| A | CN 110602491 A (SHENZHEN INSTITUTES OF ADVANCED TECHNOLOGY, CHINESE ACADEMY OF SCIENCES) 20 December 2019 (2019-12-20) description, paragraphs [0085]-[0208], and figures 1-16 | 1-53 |
| A | CN 114222118 A (BEIJING DAJIA INTERNET INFORMATION TECHNOLOGY CO., LTD.) 22 March 2022 (2022-03-22) entire document | 1-53 |
| A | US 2017214912 A1 (APPLE INC.) 27 July 2017 (2017-07-27) entire document | 1-53 |
| A | US 2019342568 A1 (TENCENT AMERICA LLC.) 07 November 2019 (2019-11-07) entire document | 1-53 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 November 2023** | **05 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/105584**

| Patent document cited in search report | | | Publication date (day/month/year) | Patent family member(s) | | | Publication date (day/month/year) |
|---|---|---|---|---|---|---|---|
| CN | 110602491 | A | 20 December 2019 | None | | | |
| CN | 114222118 | A | 22 March 2022 | None | | | |
| US | 2017214912 | A1 | 27 July 2017 | US | 10277896 | B2 | 30 April 2019 |
| US | 2019342568 | A1 | 07 November 2019 | EP | 3788786 | A1 | 10 March 2021 |
| | | | | US | 10609402 | B2 | 31 March 2020 |
| | | | | US | 2022060728 | A1 | 24 February 2022 |
| | | | | US | 11665359 | B2 | 30 May 2023 |
| | | | | KR | 20200125724 | A | 04 November 2020 |
| | | | | KR | 102474158 | B1 | 02 December 2022 |
| | | | | JP | 2021518088 | A | 29 July 2021 |
| | | | | JP | 7046220 | B2 | 01 April 2022 |
| | | | | WO | 2019213198 | A1 | 07 November 2019 |
| | | | | US | 2020195949 | A1 | 18 June 2020 |
| | | | | US | 11259039 | B2 | 22 February 2022 |

Form PCT/ISA/210 (patent family annex) (July 2022)